# EUROPEAN PATENT SPECIFICATION

(11) **EP 4 539 523 B1**
(45) Date of publication and mention of the grant of the patent: **26.08.2026**
(21) Application number: 23826263.8
(22) Date of filing: 15.06.2023
(51) Int. Cl.: H04W 12/041, H04W 12/0431, H04W 12/069, H04W 36/02, H04W 8/12

(54) **COMMUNICATION METHOD, APPARATUS, COMMUNICATION DEVICE AND COMPUTER STORAGE MEDIUM**
KOMMUNIKATIONSVERFAHREN, VORRICHTUNG, KOMMUNIKATIONSVORRICHTUNG UND COMPUTERSPEICHERMEDIUM
PROCÉDÉ, APPAREIL ET DISPOSITIF DE COMMUNICATION ET SUPPORT DE STOCKAGE INFORMATIQUE

(30) Priority: 20.06.2022 CN 202210701088
(43) Date of publication of application: 16.04.2025
(73) Proprietor: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HUANG, Xiaoting, Beijing 100053 (CN); ZHUANG, Xiaojun, Beijing 100053 (CN)
(74) Representative: Novagraaf Technologies
(86) International application number: PCT/CN2023/100416
(87) International publication number: WO 2023/246614

(56) References cited:
- WO-A1-2021/201558
- CN-A- 113 225 176
- CN-A- 113 543 126
- SAMSUNG: "New solution on AKMA Roaming", vol. SA WG3, no. e-meeting; 20220516 - 20220520, 9 May 2022 (2022-05-09), XP052195443, Retrieved from the Internet <URL:https://ftp.3gpp.org/tsg_sa/WG3_Security/TSGS3_107e/Docs/S3-221123.zip S3-221123-Sol-AKMA roaming.doc> [retrieved on 20220509]
- SAMSUNG: "New solution on Pushing AKMA context to visited PLMN", vol. SA WG3, no. e-meeting; 20220516 - 20220520, 9 May 2022 (2022-05-09), XP052195444, Retrieved from the Internet <URL:https://ftp.3gpp.org/tsg_sa/WG3_Security/TSGS3_107e/Docs/S3-221124.zip S3-221124-AKMA roaming_PUSH_sol.doc> [retrieved on 20220509]
- "3rd Generation Partnership Project; Technical Specification Group Services and System Aspects; Authentication and Key Management for Applications (AKMA) based on 3GPP credentials in the 5G System (5GS) (Release 17)", no. V17.6.0, 17 June 2022 (2022-06-17), pages 1 - 25, XP052183026, Retrieved from the Internet <URL:https://ftp.3gpp.org/Specs/archive/33_series/33.535/33535-h60.zip 33535-h60.docx> [retrieved on 20220617]
- S3: "AKMA service support for roaming UE", 3GPP DRAFT; S3-214236, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. e-meeting; 20211108 - 20211119, 1 November 2021 (2021-11-01), Mobile Competence Centre ; 650, route des Lucioles ; F-06921 Sophia-Antipolis Cedex ; France, XP052073645

## Description

### CROSS-REFERENCE TO RELATED APPLICATION

This application is based on and claims priority to Chinese patent No. 202210701088.4 filed on June 20, 2022.

### TECHNICAL FIELD

The disclosure relates to the technical field of communications, and in particular to a method and apparatus for communication, a communication device, and a computer storage medium.

### BACKGROUND

At present, the processing procedure of Authentication and Key Management for Applications (AKMA) is merely directed at the scenario where user equipment (UE) is in a Home Public Land Mobile Network (HPLMN), and there is no effective solution for the case where the UE roams to a Visit Public Land Mobile Network (VPLMN) (namely, a roaming scenario).

Related technologies are discussed in S3-221123, S3-221124, 3GPP TS 33.535 V17.6.0, and CN113543126A.

### SUMMARY

The present invention is defined in the claims. Embodiments of the disclosure provide a method for communication and a communication device.

According to the method and apparatus for communication, the communication device and the computer storage medium in the embodiments of the disclosure, on one aspect, the method includes that, an Authentication and Key Management for Applications (AKMA) Anchor Function (AAnF) receives a first message transmitted by an Application Function (AF) or transmitted by the AF through a first device. The first message is configured to acquire a key K_{AF}. In a case that the AAnF checks that the AAnF is able to provide a service for the AF, the AAnF transmits a second message to the AF or to the AF through the first device. The second message includes at least the key K_{AF}. Through the above interaction procedure, an AKMA service for a terminal roaming to a VPLMN is realized.

On the other hand, a first message transmitted by an Application Function (AF) is received by a first device. The first message is configured to acquire a key K_{AF}. In a case of checking that the first device is able to provide a service for the AF, the first device transmits a second message to the AF. The second message includes at least the key K_{AF}. In this implementation, by introducing a first device in a network architecture to manage and store AKMA key material obtained from a HPLMN, so as to provide an AKMA key service for a terminal in the VPLMN and an AF, reducing costs in interaction between the AF and the HPLMN and management costs.

### BRIEF DESCRIPTION OF THE DRAWINGS

FIG. 1 illustrates a schematic diagram of an AKMA network architecture.
FIG. 2 illustrates another schematic diagram of an AKMA network architecture.
FIG. 3 illustrates a schematic diagram of a system architecture to which a method for communication according to embodiments of the disclosure is applied.
FIGS. 4A and 4B respectively illustrate schematic diagrams of system architectures to which a method for communication according to embodiments of the disclosure is applied.
FIG. 5 illustrates a first schematic flowchart of a method for communication according to embodiments of the disclosure.
FIG. 6 illustrates a second schematic flowchart of a method for communication according to embodiments of the disclosure not covered by the claimed invention.
FIG. 7 illustrates a third schematic flowchart of a method for communication according to embodiments of the disclosure not covered by the claimed invention.
FIG. 8 illustrates a fourth schematic flowchart of a method for communication according to embodiments of the disclosure not covered by the claimed invention.
FIG. 9 illustrates a fifth schematic flowchart of a method for communication according to embodiments of the disclosure not covered by the claimed invention.
FIG. 10 illustrates a sixth schematic flowchart of a method for communication according to embodiments of the disclosure not covered by the claimed invention.
FIG. 11 illustrates a seventh schematic flowchart of a method for communication according to embodiments of the disclosure.
FIG. 12 illustrates a first schematic diagram of an interaction procedure of a method for communication according to embodiments of the disclosure.
FIG. 13 illustrates a second schematic diagram of an interaction procedure of a method for communication according to embodiments of the disclosure.
FIG. 14 illustrates a third schematic diagram of an interaction procedure of a method for communication according to embodiments of the disclosure.
FIG. 15 illustrates a first schematic structural diagram of composition of an apparatus for communication according to embodiments of the disclosure not covered by the claimed invention.
FIG. 16 illustrates a second schematic structural diagram of composition of an apparatus for communication according to embodiments of the disclosure not covered by the claimed invention.
FIG. 17 illustrates a third schematic structural diagram of composition of an apparatus for communication according to embodiments of the disclosure not covered by the claimed invention.
FIG. 18 illustrates a fourth schematic structural diagram of composition of an apparatus for communication according to embodiments of the disclosure not covered by the claimed invention.
FIG. 19 illustrates a fifth schematic structural diagram of composition of an apparatus for communication according to embodiments of the disclosure not covered by the claimed invention.
FIG. 20 illustrates a sixth schematic structural diagram of composition of an apparatus for communication according to embodiments of the disclosure not covered by the claimed invention.
FIG. 21 illustrates a seventh schematic structural diagram of composition of an apparatus for communication according to embodiments of the disclosure not covered by the claimed invention.
FIG. 22 illustrates a schematic structural diagram of hardware composition of a communication device according to embodiments of the disclosure.

### DETAILED DESCRIPTION

The disclosure is further described in detail in conjunction with the accompanying drawings and particular embodiments.

The technical solution of the embodiments of the disclosure may be applied to various communication systems, for example, a global system of mobile communication (GSM), a long term evolution (LTE) system, a 5th generation (5G) system or the like. Optionally, the 5G system or 5G network may also be referred to as a new radio (NR) system or NR network.

Exemplarily, the communication system to which the embodiments of the disclosure are applied may include a network device and a terminal device (or may be referred to as a terminal, a communication terminal or the like). The network device may be a device communicating with the terminal device. The network device can provide communication coverage for a specific area, and can communicate with the terminal within the coverage. Optionally, the network device may be a base station in various communication systems, for example an evolutional NodeB (eNB) in an LTE system, or a base station (gNB) in a 5G system or NR system.

It is to be understood that devices having a communication function in the network/system in the embodiments of the disclosure may be referred to as a communication device. The communication device may include a network device and a terminal that have a communication function. The network device and the terminal device may be particular devices described above, which will not be described herein again. The communication device may further include other devices in the communication system, for example a network controller, a mobility management entity and other network entities, which is not limited in the embodiments of the disclosure.

It is to be understood that the terms "system" and "network" herein are often used exchangeably. The term "and/or" herein merely describes a relation between associated objects, representing that three relations may exist. For example A and/or B may represent following three cases: existence of A alone, existence of both A and B, and existence of B alone. The character "/" generally indicates that the contextual objects are in an "or" relationship.

The terms "first", "second", etc. in the description and claims of the disclosure are used to distinguish similar objects, and do not necessarily describe a specific sequence or ranking order. It should be understood that such used terms may be interchangeable where appropriate so that the embodiments of the disclosure described herein, for example, can be implemented in an order other than those depicted or described herein. In addition, the terms "comprise/include" and "have" and any variants thereof are intended to cover non-exclusive inclusion. For example, a process, method, system, product or device containing a series of steps or units is not necessarily limited to those steps or units clearly listed, and can include other steps or units not clearly listed or inherent to the process, method, system, product or device.

Before describing the technical solutions of the embodiments of the disclosure in detail, the related technologies of AKMA will be briefly described.

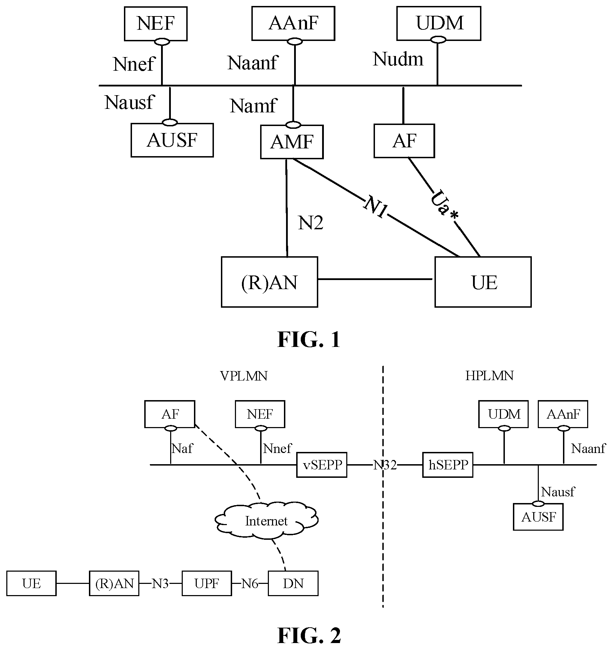

FIG. 1 illustrates a schematic diagram of an Authentication and Key Management for Applications (AKMA) network architecture. As illustrated in FIG. 1, network elements of a core network in the AKMA network architecture mainly include: an AKMA Anchor Function (AAnF), an Application Function (AF), an Authentication Server Function (AUSF), etc.

The AAnF is an anchor function deployed within a home operator (or a Home Public Land Mobile Network (HPLMN)). The AAnF stores an AKMA anchor key (K_{AKMA}) for an AKMA service. After 5G primary authentication between UE and the AUSF is successfully completed, the AUSF transmits the key to the AAnF. The AAnF also generates a key K_{AF} for use between the UE and the AF, and maintains AKMA context of the UE.

The AF having the AKMA service can request the AAnF for an AKMA application key K_{AF} through an AKMA key identifier (A-KID). The AF can obtain the K_{AF} only after passing through authentication and authorization of an operator network.

The AUSF provides an identifier of the UE and AKMA key material to the AAnF, including, for example, the A-KID and the K_{AKMA}.

At present, no network architecture in an AKMA roaming scenario and corresponding processing procedure are proposed. Based on the AKMA network architecture illustrated in FIG. 1, it can be imagined that each time when the UE roams to a Visit Public Land Mobile Network (VPLMN), an AKMA service architecture may be as illustrated in FIG. 2 if the AF is also an application function to which the VPLMN subscribes. Under such a network architecture, on the one hand, one same AF provides an application service for UE affiliated with multiple public land mobile networks (PLMNs), which means that when the UE roams to a visit PLMN (VPLMN) where the AF is located and the UE uses an AKMA service, the AF needs to interact with a Home PLMN (HPLMN) of the UE to obtain AKMA key material (such as the K_{AF}). The HPLMN may also be referred to as a home network or a home place network, and the VPLMN may also be referred to as a visited network or a visited place network.

On the other hand, one same UE may subscribe to the AKMA service with multiple AFs in the visited place where the UE is located, which means that when the UE uses the AKMA service, these AFs interact with the HPLMN of the UE to obtain AKMA key material respectively.

As such, the problems encountered are: 1) an AF needs to interact with multiple HPLMNs to obtain AKMA key material, that is, the AF needs to sign corresponding AKMA roaming agreements with multiple HPLMNs, which increases management costs of the AF; and 2) when UE interacts with an AF to use an AKMA service, the AF needs to interact with the HPLMN to obtain key material, which increases the delay of the AKMA service.

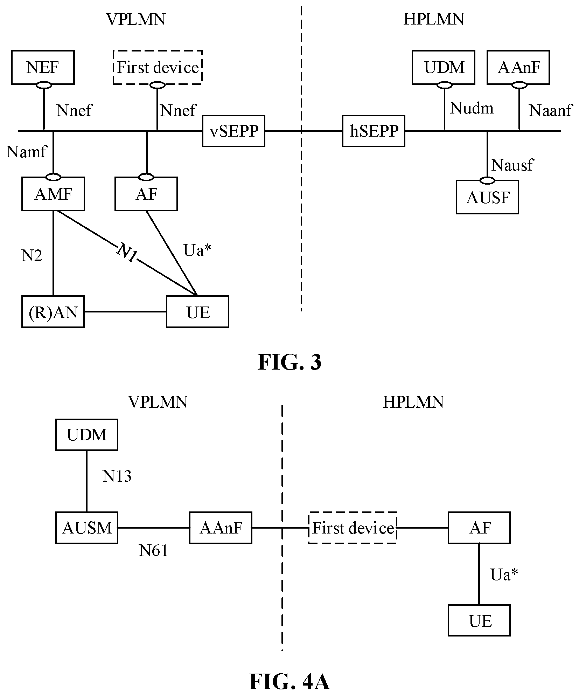

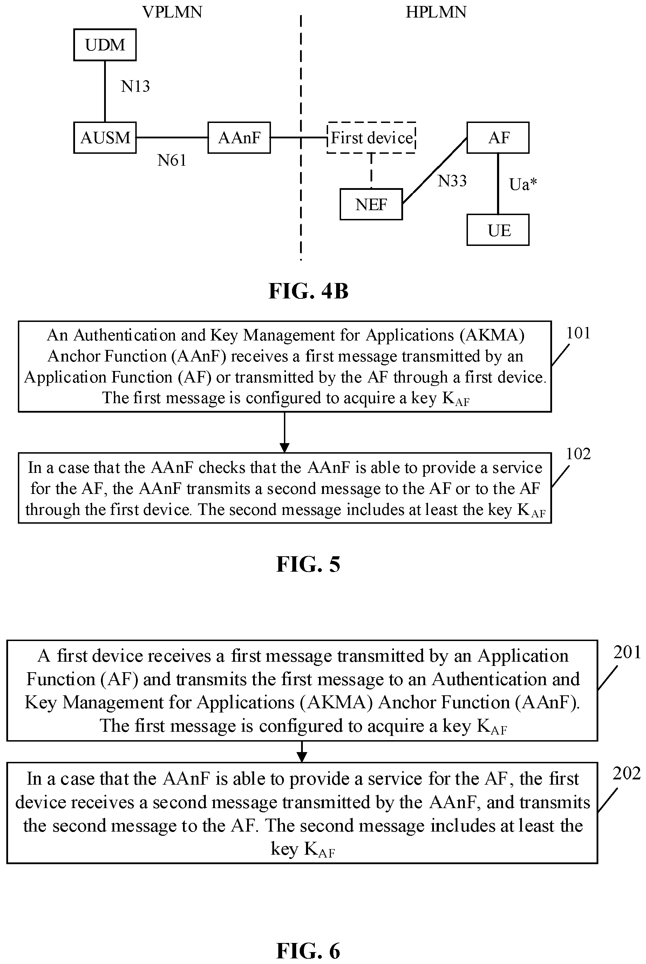

FIG. 3 illustrates a schematic diagram of a system architecture to which a method for communication according to embodiments of the disclosure is applied. FIGS. 4A and 4B respectively illustrate schematic diagrams of system architectures to which a method for communication according to embodiments of the disclosure is applied. Referring to FIG. 3, FIG. 4A, and FIG. 4B, in the embodiments of the disclosure, a first device deployed in a VPLMN is added. Functions of the first device include at least: 1) acting as a proxy between an AF (vAF) of a visited place and an AAnF (HAAnF) of a home place; 2) addressing a home network and an HAAnF corresponding to UE, and establishing secure communication with the HAAnF; and 3) verifying legality of the vAF and authorizing the vAF to request AKMA key material.

In embodiments of the disclosure, the first device may be implemented in multiple feasible ways. The first device may also be referred to as, for example, a proxy, a proxy function, a proxy network element, a network element, a proxy network function (NF), or a Network Function (NF), or may be a device having at least one of a proxy function, a management function, a forwarding function, a key management function, a key storage function, or a key distribution function. The first device may only have the above network functions, or may also have other network functions; namely, the above network functions may be provided together with other network functions.

When actually deployed or implemented, the first device may be provided together with another other network element in the VPLMN, or logical functions of the first device may be implemented by another network element within the VPLMN. Exemplarily, if the VPLMN is deployed with an AKMA service, the proxy function may be an AAnF of the VPLMN. If the VPLMN is deployed with no AKMA service, the proxy function may be an independent network element, or may be provided together with a Network Exposure Function (NEF), a User Plane Function (UPF) or another network element, or logical functions of the proxy function may be implemented by another network element.

Additionally, the first device may also be an optional function, and the VPLMN may be deployed with the first device on demand. For example, multiple locally deployed AFs in the VPLMN use the AKMA service provided by the HPLMN, the VPLMN may choose to locally deploy a first device to serve as a proxy of these AFs to interact with the AAnF of the HPLMN to obtain AKMA keys, for convenience of management and subscription. Alternatively, an AF deployed in the VPLMN provides services for multiple UEs of the HPLMNs and uses the AKMA service, and the VPLMN may also choose to locally deploy a first device to serve as a proxy of the AF to interact with the AAnF of the HPLMN of these UEs to obtain AKMA keys.

In a case that the AF is an AF of a third party, the AF interacts with the first device or the AAnF through a Network Exposure Function (NEF), as illustrated in FIG. 4b.

At least based on the above network architecture, the following embodiments of the disclosure are proposed.

Embodiments of the disclosure provide a method for communication. FIG. 5 illustrates a first schematic flowchart of a method for communication according to embodiments of the disclosure. As illustrated in FIG. 5, the method includes following operations.

At 101, an Authentication and Key Management for Applications (AKMA) Anchor Function (AAnF) receives a first message transmitted by an Application Function (AF) or transmitted by the AF through a first device. The first message is configured to acquire a key K_{AF}.

At 102, in a case that the AAnF checks that the AAnF is able to provide a service for the AF, the AAnF transmits a second message to the AF or to the AF through the first device. The second message includes at least the key K_{AF}.

In some optional embodiments, the AAnF is within a Home Public Land Mobile Network (HPLMN), and/or the first device is within a Visit Public Land Mobile Network (VPLMN), and/or the AF is within the VPLMN.

Exemplarily, this embodiment is applicable for an AKMA roaming scenario. For example, if UE roams to a VPLMN and the AF is also an application function to which the VPLMN subscribes, the AF needs to obtain AKMA key material (for example, the key K_{AF}) when the UE uses an AKMA service. The AAnF of the HPLMN receives from the AF a first message configured to acquire a key K_{AF}, and transmits a second message including at least the K_{AF} to the AF in a case of checking that the AAnF is able to provide a service for the AF.

In an implementation, in a case that a first device is deployed, the first device addresses the HPLMN and the AAnF corresponding to the UE and establishes secure communication with the AAnF; thus the first message is transmitted to the AAnF through the first device, and the second message is transmitted to the AF through the first device accordingly. In another implementation, in a case that no first device is deployed, the AF may query the AAnF of the HPLMN corresponding to the UE and establish secure communication with the AAnF; thus the AF may transmit the first message to the AAnF directly, and the AAnF transmits the second message to the AF directly accordingly. Optionally, the AF may transmit a query message to a Network Repository Function (NRF) to obtain relevant information of the AAnF (for example, the address of the AAnF), and may further transmit the first message based on the obtained relevant information of the AAnF.

In some embodiments, the first message includes an Authentication and Key Management for Applications (AKMA) key identifier (A-KID) and/or an identifier of the AF.

In some optional embodiments, the method further includes that, the AAnF derives the key K_{AF} based on an AKMA anchor key K_{AKMA}.

In this embodiment, during authentication between the terminal (or UE) and the AUSF or after the authentication is completed, the AUSF transmits the AKMA anchor key (K_{AKMA}) to the AAnF. The AAnF is a function within a home operator (or HPLMN) and stores the K_{AKMA} for the AKMA service. After receiving the first message, the AAnF can derive the K_{AF} based on the K_{AKMA}. The K_{AF} may also be referred to as an application key.

In some optional embodiments, the second message further includes at least one of: validity duration information of the key K_{AF}; a Subscription Permanent Identifier (SUPI); or a Generic Public Subscription Identifier (GPSI).

In this embodiment, the validity duration information of the K_{AF} indicates the period of validity of the K_{AF}, or the expiration time of the K_{AF}, or may be referred to as K_{AF} expiration time.

In some optional embodiments of the disclosure, the method further includes that the AAnF receives a third message transmitted by an Authentication Server Function (AUSF). The third message is configured to register a key and includes at least one of: an AKMA key identifier (A-KID), an AKMA anchor key K_{AKMA}, a Subscription Permanent Identifier (SUPI), or roaming information of a terminal.

In this embodiment, the AAnF registers the key after receiving the third message. Optionally, the method further includes that the AAnF transmits a response message for the third message to the AUSF.

In some optional embodiments, the roaming information of the terminal includes at least one of: first indication information indicating that the terminal is in a roaming state, second indication information indicating that the terminal is not in a roaming state, roaming destination information, subscription information of the terminal at a roaming destination, or policy information of the terminal at the roaming destination.

In this embodiment, in a case that the terminal is not in a roaming state, that is, when the terminal is in the HPLMN, the roaming information of the terminal may include the second indication information indicating that the terminal is not in a roaming state. In a case that the terminal is in a roaming state, that is, when the terminal is in the VPLMN, the roaming information of the terminal may include at least one of: the first indication information indicating that the terminal is in a roaming state, the roaming destination information, the subscription information of the terminal at the roaming destination, or the policy information of the terminal at the roaming destination.

The roaming destination information may be information indicating a roaming destination network (or VPLMN). For example, the roaming destination information may be a roaming destination network name/identifier, such as a Service Network (SN) name.

The subscription information of the terminal at the roaming destination described above may specifically include: a service subscription list between the terminal and the roaming destination, a subscription policy between the terminal and the roaming destination, and so on.

The policy information of the terminal at the roaming destination described above may include: whether the HPLMN allows the terminal to use the AKMA service at the visit place, whether the VPLMN allows the terminal to use the AKMA service, service agreements between the HPLMN and the VPLMN, a lawful interception policy of the HPLMN, a lawful interception policy of the VPLMN and so on.

In some optional embodiments, the roaming information of the terminal is obtained by the AUSF from a Unified Data Management (UDM).

Optionally, the roaming information of the terminal obtained by the AUSF from the UDM is associated with the SUPI of the terminal.

In some embodiments of the disclosure, after receiving the first message, the method further includes that the AAnF obtains roaming information of a terminal from a Unified Data Management (UDM). The roaming information of the terminal is related to a terminal corresponding to the A-KID in the first message.

In this embodiment, after receiving the first message, the AAnF may find the SUPI corresponding to the terminal according to the A-KID in the first message, and obtain corresponding roaming information of the terminal from the UDM using the SUPI.

In some optional embodiments not covered by the claimed invention, the operation that the AAnF checks whether the AAnF is able to provide a service for the AF includes that the AAnF checks whether the AAnF is able to provide a service for the AF according to the identifier of the AF.

In some other optional embodiments, the operation that the AAnF checks whether the AAnF is able to provide a service for the AF includes that the AAnF checks, according to the roaming information of the terminal, whether the AAnF is able to provide a service for the AF.

In this embodiment, the AAnF may check whether the AAnF is able to provide a service for the AF according to the identifier of the AF in combination with the roaming information of the terminal (for example, the subscription information of the terminal at the roaming destination and/or the policy information of the terminal at the roaming destination).

Based on the above embodiment, embodiments of the disclosure not covered by the claimed invention further provide a method for communication. FIG. 6 illustrates a second schematic flowchart of a method for communication according to embodiments of the disclosure not covered by the claimed invention. As illustrated in FIG. 6, the method includes following operations.

At 201, a first device receives a first message transmitted by an Application Function (AF) and transmits the first message to an Authentication and Key Management for Applications (AKMA) Anchor Function (AAnF). The first message is configured to acquire a key K_{AF}.

At 202, in a case that the AAnF is able to provide a service for the AF, the first device receives a second message transmitted by the AAnF, and transmits the second message to the AF. The second message includes at least the key K_{AF}.

In some optional embodiments, the AAnF is within a Home Public Land Mobile Network (HPLMN), and/or the first device is within a Visit Public Land Mobile Network (VPLMN), and/or the AF is within the VPLMN.

In this embodiment, as a proxy function or proxy device in the VPLMN, the first device has a function of a proxy between the AF of the visited place and the AAnF of the home place. After receiving the first message transmitted by the AF, the first device addresses the AAnF of the corresponding visited place and transmits the first message to the AAnF. The first device receives a second message transmitted by the AAnF and transmits the second message to the AF in a case that the AAnF is able to provide a service for the AF.

In some optional embodiments, the first message includes an Authentication and Key Management for Applications (AKMA) key identifier (A-KID) and/or an identifier of the AF.

In this embodiment, the A-KID serves as an AKMA key identifier. After receiving the first message, the first device may find the identifier of the corresponding terminal, such as SUPI, according to the A-KID in the first message, and may further query and determine information (such as the identifier and/or address of the AAnF) of the AAnF of the corresponding home place according to the identifier of the terminal.

In some optional embodiments, the second message further includes at least one of: validity duration information of the key K_{AF}; a Subscription Permanent Identifier (SUPI); or a Generic Public Subscription Identifier (GPSI).

In this embodiment, the validity duration information of the K_{AF} indicates the period of validity of the K_{AF}, or the expiration time of the K_{AF}, or may be referred to as K_{AF} expiration time.

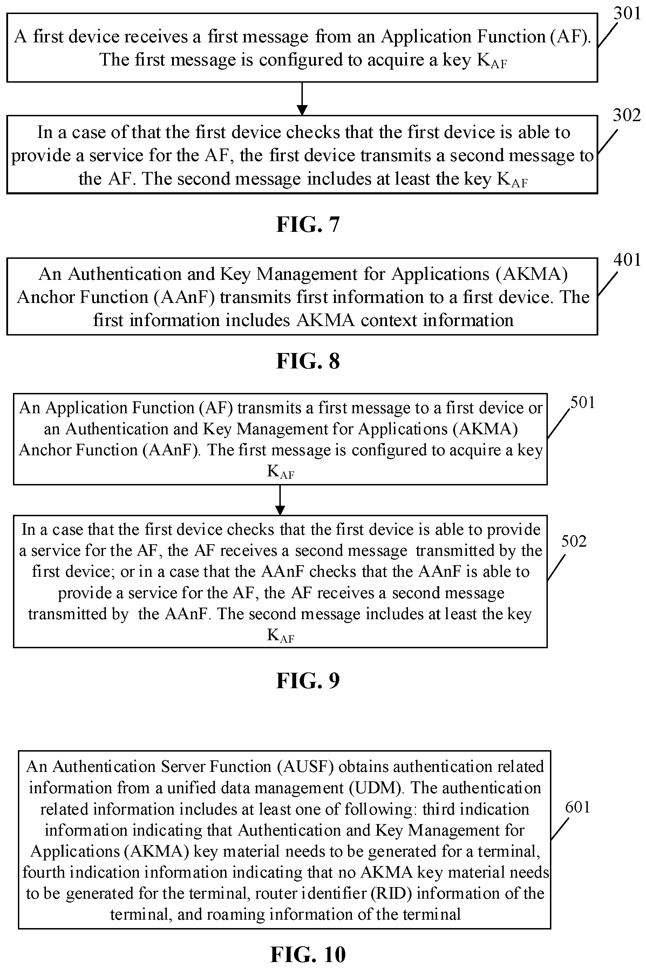

Embodiments of the disclosure not covered by the claimed invention further provide a method for communication. FIG. 7 illustrates a third schematic flowchart of a method for communication according to embodiments of the disclosure not covered by the claimed invention. As illustrated in FIG. 7, the method includes following operations.

At 301, a first device receives a first message transmitted by an Application Function (AF). The first message is configured to acquire a key K_{AF}.

At 302, in a case of that the first device checks that the first device is able to provide a service for the AF, the first device transmits a second message to the AF. The second message includes at least the key K_{AF}.

In some optional embodiments, the first device is within a Visit Public Land Mobile Network (VPLMN), and/or the AF is within the VPLMN.

Exemplarily, this embodiment is applicable for an AKMA roaming scenario. For example, if UE roams to a VPLMN and the AF is also an application function to which the VPLMN subscribes, the AF needs to obtain AKMA key material (for example, the key K_{AF}) when the UE uses an AKMA service. The first device, as a proxy function or proxy device deployed in the VPLMN, has a function of verifying the legality of the AF and authorizing AKMA key material requested by the AF.

In some optional embodiments, the first message includes an Authentication and Key Management for Applications (AKMA) key identifier (A-KID) and/or an identifier of the AF.

In this embodiment, the first device may check whether the first device is able to provide a service for the AF based on the identifier of the AF, and determine to allow the key K_{AF} to be transmitted to the AF when determining that the first device is able to provide a service for the AF.

Optionally, in a case that the first device determines that no key K_{AF} exists, the method may further include that, the first device derives the K_{AF} based on the K_{AKMA}.

In this embodiment, as a proxy between the AF of the visited place and the AAnF of the home place, the first device obtains the K_{AKMA} from the AAnF in advance and stores the same, and derives the K_{AF} according to the K_{AKMA} obtained in advance in the case of checking that the first device is able to provide a service for the AF.

In some optional embodiments, the method further includes that, the first device receives first information from an Authentication and Key Management for Applications (AKMA) Anchor Function (AAnF). The first information includes AKMA context information.

In this embodiment, the operation that the first device receives the first information transmitted by the AAnF may be implemented in several feasible ways. As an implementation, the first device transmits a request message to the AAnF. The request message is configured to request AKMA context information. The first device receives the first information transmitted by the AAnF. As another implementation, the first device receives the first information actively pushed by the AAnF. In the second implementation described above, the chronological order in which the first device receives the first information actively pushed by the AAnF and receives the first message transmitted by the AF is not limited in the embodiments of the disclosure.

In some optional embodiments, the first information includes at least one of: an AKMA key identifier (A-KID), an AKMA anchor key K_{AKMA} or a Subscription Permanent Identifier (SUPI).

Optionally, the AAnF is in the HPLMN.

Based on the above embodiment, embodiments of the disclosure not covered by the claimed invention further provide a method for communication. FIG. 8 illustrates a fourth schematic flowchart of a method for communication according to embodiments of the disclosure not covered by the claimed invention. As illustrated in FIG. 8, the method includes following operations.

At 401, an Authentication and Key Management for Applications (AKMA) Anchor Function (AAnF) transmits first information to a first device. The first information includes AKMA context information.

In some optional embodiments, the first information includes at least one of: an AKMA key identifier (A-KID), an AKMA anchor key K_{AKMA} or a Subscription Permanent Identifier (SUPI).

In this embodiment, the operation that the AAnF transmits the first information to the first device may be implemented in several feasible ways. As an implementation, the AAnF receives a request message transmitted by the first device. The request message is configured to request AKMA context information. The AAnF transmits the first information to the first device based on the request message. As another implementation, the AAnF actively pushes the first information to the first device.

In this embodiment, the AAnF may transmit the AKMA context information to the first device in any of the above implementations after key registration is completed.

In some optional embodiments, the method further includes that, the AAnF receives a third message transmitted by an Authentication Server Function (AUSF). The third message is configured to register a key and includes at least one of: an AKMA key identifier (A-KID), an AKMA anchor key K_{AKMA}, a Subscription Permanent Identifier (SUPI), or roaming information of a terminal.

In this embodiment, the key registration process described above is initiated by the AUSF to the AAnF, and the AUSF transmits identification information of the terminal (such as SUPI), AKMA key material (such as A-KID, and K_{AKMA}) and so on to the AAnF for use in key registration. Optionally, the AUSF may further provide the roaming information of the terminal to the AAnF.

Optionally, the roaming information of the terminal includes at least one of: first indication information indicating that the terminal is in a roaming state, second indication information indicating that the terminal is not in a roaming state, roaming destination information, subscription information of the terminal at a roaming destination, or policy information of the terminal at the roaming destination.

In this embodiment, in a case that the terminal is not in a roaming state, that is, when the terminal is in the HPLMN, the roaming information of the terminal may include the second indication information indicating that the terminal is not in a roaming state. In a case that the terminal is in a roaming state, that is, when the terminal is in the VPLMN, the roaming information of the terminal may include at least one of: the first indication information indicating that the terminal is in a roaming state, the roaming destination information, the subscription information of the terminal at the roaming destination, or the policy information of the terminal at the roaming destination.

The roaming destination information may be information indicating a roaming destination network (or VPLMN). For example, the roaming destination information may be a roaming destination network name/identifier, such as a Service Network (SN) name.

The subscription information of the terminal at the roaming destination described above may specifically include: a service subscription list between the terminal and the roaming destination, a subscription policy between the terminal and the roaming destination, and so on.

The policy information of the terminal at the roaming destination described above may include: whether the HPLMN allows the terminal to use the AKMA service at the visit place, whether the VPLMN allows the terminal to use the AKMA service, service protocols between the HPLMN and the VPLMN, a lawful interception policy of the HPLMN, a lawful interception policy of the VPLMN and so on.

In some optional embodiments, the roaming information of the terminal is obtained by the AUSF from a Unified Data Management (UDM).

Optionally, the roaming information of the terminal obtained by the AUSF from the UDM is associated with the SUPI of the terminal.

In some optional embodiments, the AAnF is within a Home Public Land Mobile Network (HPLMN), and/or the first device is within a Visit Public Land Mobile Network (VPLMN).

Based on the above embodiment, embodiments of the disclosure not covered by the claimed invention further provide a method for communication. FIG. 9 illustrates a fifth schematic flowchart of a method for communication according to embodiments of the disclosure not covered by the claimed invention. As illustrated in FIG. 9, the method includes following operations.

At 501, an Application Function (AF) transmits a first message to a first device or an Authentication and Key Management for Applications (AKMA) Anchor Function (AAnF). The first message is configured to acquire a key K_{AF}.

At 502, in a case that the first device checks that the first device is able to provide a service for the AF, the AF receives a second message transmitted by the first device; or in a case that the AAnF checks that the AAnF is able to provide a service for the AF, the AF receives a second message transmitted by the AAnF. The second message includes at least the key K_{AF}.

In some optional embodiments, the AAnF is within a Home Public Land Mobile Network (HPLMN), and/or the first device is within a Visit Public Land Mobile Network (VPLMN), and/or the AF is within the VPLMN.

In some optional embodiments, the first message includes an Authentication and Key Management for Applications (AKMA) key identifier (A-KID) and/or an identifier of the AF.

In some optional embodiments, the second message further includes at least one of: validity duration information of the key K_{AF}; a Subscription Permanent Identifier (SUPI); or a Generic Public Subscription Identifier (GPSI).

In this embodiment, the validity duration information of the K_{AF} indicates the period of validity of the K_{AF}, or the expiration time of the K_{AF}, or may be referred to as K_{AF} expiration time.

Embodiments of the disclosure not covered by the claimed invention further provide a method for communication. FIG. 10 illustrates a sixth schematic flowchart of a method for communication according to embodiments of the disclosure not covered by the claimed invention. As illustrated in FIG. 10, the method includes following operations.

At 601, an Authentication Server Function (AUSF) obtains authentication related information from a unified data management (UDM). The authentication related information includes at least one of following: third indication information indicating that Authentication and Key Management for Applications (AKMA) key material needs to be generated for a terminal, fourth indication information indicating that no AKMA key material needs to be generated for the terminal, router identifier (RID) information of the terminal, or roaming information of the terminal.

In this embodiment, both the AUSF and the UDM are in the HPLMN. During the authentication between the terminal and the AUSF, the AUSF transmits an authentication request related to the terminal to the UDM, and the authentication request may include a terminal identifier. The UDM may perform check based on the terminal identifier in the authentication request, determine authentication related information (or authentication information) of the terminal, and transmit the authentication related information to the AUSF through an authentication response.

In this embodiment, the AUSF may determine, based on the third indication information, that AKMA key material needs to be generated for the terminal, for example, K_{AKMA} and A-KID need to be derived from K_{AUSF}. Alternatively, the AUSF may determine, based on the fourth indication information, that no AKMA key material needs to be generated for the terminal.

Optionally, the terminal identifier may be a SUPI and/or a Subscription Concealed Identifier (SUCI).

In some optional embodiments, the roaming information of the terminal includes at least one of: first indication information indicating that the terminal is in a roaming state, second indication information indicating that the terminal is not in a roaming state, roaming destination information, subscription information of the terminal at a roaming destination, or policy information of the terminal at the roaming destination.

In this embodiment, in a case that the terminal is not in a roaming state, that is, when the terminal is in the HPLMN, the roaming information of the terminal may include the second indication information indicating that the terminal is not in a roaming state. In a case that the terminal is in a roaming state, that is, when the terminal is in the VPLMN, the roaming information of the terminal may include at least one of: the first indication information indicating that the terminal is in a roaming state, the roaming destination information, the subscription information of the terminal at the roaming destination, or the policy information of the terminal at the roaming destination.

The roaming destination information may be information indicating a roaming destination network (or VPLMN). For example, the roaming destination information may be a roaming destination network name/identifier, such as a Service Network (SN) name.

The subscription information of the terminal at the roaming destination described above may specifically include: a service subscription list between the terminal and the roaming destination, a subscription policy between the terminal and the roaming destination, and so on.

The policy information of the terminal at the roaming destination described above may include: whether the HPLMN allows the terminal to use the AKMA service at the visit place, whether the VPLMN allows the terminal to use the AKMA service, service protocols between the HPLMN and the VPLMN, a lawful interception policy of the HPLMN, a lawful interception policy of the VPLMN and so on.

In some optional embodiments, the method further includes that the AUSF transmits a third message to an AKMA Anchor Function (AAnF). The third message is configured to register a key and includes at least one of: an AKMA key identifier (A-KID), an AKMA anchor key K_{AKMA}, a Subscription Permanent Identifier (SUPI), or roaming information of the terminal.

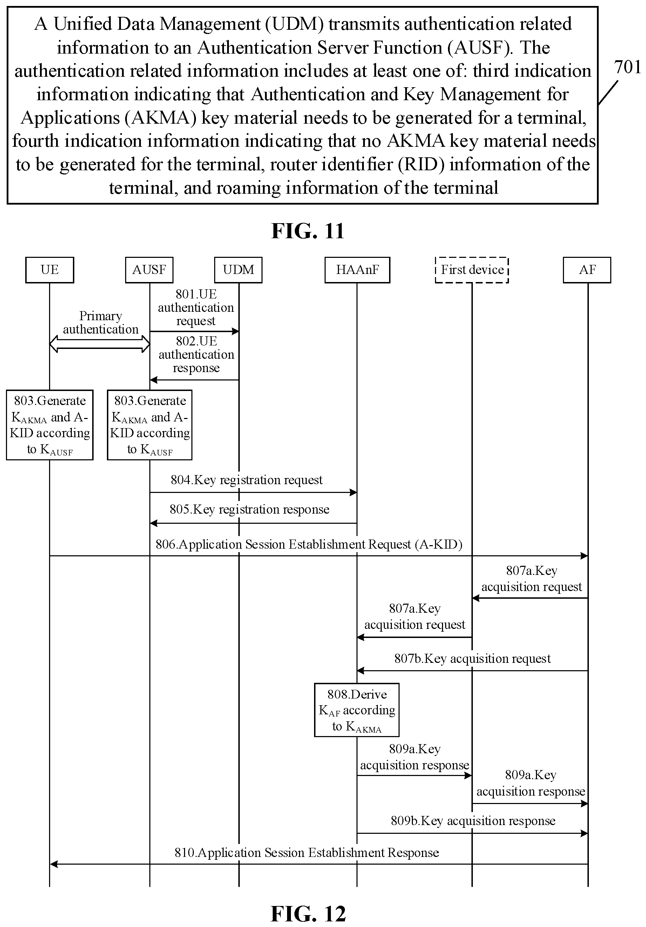

Based on the above embodiment, embodiments of the disclosure further provide a method for communication. FIG. 11 illustrates a seventh schematic flowchart of a method for communication according to embodiments of the disclosure. As illustrated in FIG. 11, the method includes following operations.

At 701, a Unified Data Management (UDM) transmits authentication related information to an Authentication Server Function (AUSF). The authentication related information includes at least one of: third indication information indicating that Authentication and Key Management for Applications (AKMA) key material needs to be generated for a terminal, fourth indication information indicating that no AKMA key material needs to be generated for the terminal, router identifier (RID) information of the terminal, or roaming information of the terminal.

In this embodiment, both the AUSF and the UDM are in the HPLMN. During the authentication between the terminal and the AUSF, the AUSF transmits an authentication request related to the terminal to the UDM, and the authentication request may include a terminal identifier. The UDM may perform check based on the terminal identifier in the authentication request, determine authentication related information (or authentication information) of the terminal, and transmit the authentication related information to the AUSF through an authentication response.

Optionally, the terminal identifier may be a SUPI and/or a Subscription Concealed Identifier (SUCI).

In some optional embodiments, the roaming information of the terminal includes at least one of: first indication information indicating that the terminal is in a roaming state, second indication information indicating that the terminal is not in a roaming state, roaming destination information, subscription information of the terminal at a roaming destination, or policy information of the terminal at the roaming destination.

In this embodiment, in a case that the terminal is not in a roaming state, that is, when the terminal is in the HPLMN, the roaming information of the terminal may include the second indication information indicating that the terminal is not in a roaming state. In a case that the terminal is in a roaming state, that is, when the terminal is in the VPLMN, the roaming information of the terminal may include at least one of: the first indication information indicating that the terminal is in a roaming state, the roaming destination information, the subscription information of the terminal at the roaming destination, or the policy information of the terminal at the roaming destination.

The roaming destination information may be information indicating a roaming destination network (or VPLMN). For example, the roaming destination information may be a roaming destination network name/identifier, such as a Service Network (SN) name.

The subscription information of the terminal at the roaming destination described above may specifically include: a service subscription list between the terminal and the roaming destination, a subscription policy between the terminal and the roaming destination, and so on.

The policy information of the terminal at the roaming destination described above may include: whether the HPLMN allows the terminal to use the AKMA service at the visit place, whether the VPLMN allows the terminal to use the AKMA service, service protocols between the HPLMN and the VPLMN, a lawful interception policy of the HPLMN, a lawful interception policy of the VPLMN and so on.

In some embodiments, the method further includes that, the UDM receives a fourth message transmitted by an AKMA Anchor Function (AAnF). The fourth message is configured to request the roaming information of the terminal. The method further includes that the UDM transmits a fifth message to the AAnF. The fifth message includes the roaming information of the terminal.

The method for communication according to the embodiments of the disclosure is described in detail hereinafter in conjunction with particular examples.

### Example I

FIG. 12 illustrates a first schematic diagram of an interaction procedure of a method for communication according to embodiments of the disclosure. As illustrated in FIG. 12, the method includes following operations.

At 801, during primary authentication between UE and an AUSF, the AUSF transmits a UE authentication request to a UDM. The UE authentication request may include a UE identifier.

Here, the UE identifier may include an SUPI and/or an SUCI.

At 802, the UDM transmits a UE authentication response to the AUSF, and the UE authentication response may include a subscription credential (such as an Authentication and Key Agreement (AKA) authentication vector) and an authentication method.

Here, besides returning an AKMA indication (AKMA Ind) (i.e., indicating whether the AUSF needs to generate AKMA key material for the UE, including, for example, A-KID and K_{AKMA}) and the RID information of the UE to the AUSF, the UDM may further carry roaming information of the UE (that is, roaming information of the terminal), such as first indication information indicating that the UE is in a roaming state, second indication information indicating that the UE is not in a roaming state, roaming destination information (such as the identifier or name of the roaming destination), subscription information of the UE at the roaming destination, policy information of the UE at the roaming destination, etc.

At 803, according to an AKMA indication received from the UDM, the AUSF derives the K_{AKMA} and the A-KID from the key K_{AUSF} after the primary authentication is successfully completed. Correspondingly, the UE derives the K_{AKMA} and the A-KID from the key K_{AUSF}.

At 804, the AUSF addresses the AAnF of the HPLMN and transmits a key registration request to the AAnF. The request message may carry the A-KID, the K_{AKMA}, and the SUPI of the UE, and may further carry roaming information of the UE (that is, roaming information of the terminal), such as the first indication information indicating that the UE is in a roaming state, the second indication information indicating that the UE is not in a roaming state, the roaming destination information (such as the identifier or name of the roaming destination), the subscription information of the UE at the roaming destination, the policy information of the UE at the roaming destination, etc.

At 805, the AAnF transmits a key registration response to the AUSF.

At 806, the UE establishes communication with an AF, and the UE transmits an Application Session Establishment Request to the AF. The request message may include the A-KID.

At 807a, in a case that a first device is deployed in the VPLMN, if no AKMA context associated with the A-KID exists in the AF, the AF addresses a locally deployed first device according to a local configuration or policy or according to a policy obtained from another network element (such as an NRF), and transmits a key acquisition request to the first device. After receiving the key acquisition request, the first device transmits a key acquisition request to the AAnF. The request message may carry the A-KID and the identifier of the AF (AF ID).

At 807b, in a case that no first device is deployed in the VPLMN, if no AKMA context associated with the A-KID exists in the AF, the AF chooses to address the AAnF of the HPLMN according to a local configuration or policy or according to a policy obtained from another network element (such as an NRF), and transmits a key acquisition request to the AAnF. The request message may carry the A-KID and the identifier of the AF (AF ID).

At 808, in a case that no K_{AF} exists in the AAnF, the AAnF derives an AKMA application key (K_{AF}) according to the K_{AKMA}.

At 809a, in a case that a first device is deployed in the VPLMN, the AAnF transmits a key acquisition response to the first device, and after receiving the key acquisition response, the first device transmits the key acquisition response to the AF. The response message may carry the K_{AF}, validity duration information of the K_{AF} (such as a life cycle) and the SUPI.

At 809b, in a case that no first device is deployed in the VPLMN, the AAnF transmits a key acquisition response to the AF. The response message may carry the K_{AF}, validity duration information of the K_{AF} (such as a life cycle) and the SUPI.

In this example, the AAnF checks whether the AAnF can provide a service for the AF using the AF ID according to a configured local policy, or authorization information provided by the NRF or a policy provided by the NRF, or the AAnF checks whether the AAnF can provide a service for the AF using the AF ID in combination with roaming information of the UE (for example, subscription information of the UE at the roaming destination and/or policy information of the UE at the roaming destination). If the AAnF determines that the AAnF can provide a service for the AF, operation 808 and a subsequent procedure are performed. Otherwise, the AAnF refuses to perform operation 808 and the subsequent procedure.

At 810, the AF transmits an Application Session Establishment Response to the UE.

### Example II

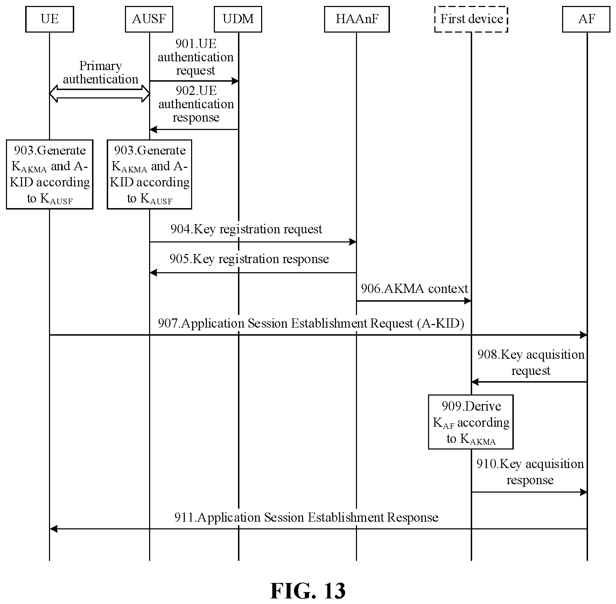

FIG. 13 illustrates a second schematic diagram of an interaction procedure of a method for communication according to embodiments of the disclosure. As illustrated in FIG. 13, the method includes following operations.

At 901, during primary authentication between UE and an AUSF, the AUSF transmits a UE authentication request to a UDM. The UE authentication request may include a UE identifier.

Here, the UE identifier may include an SUPI and/or an SUCI.

At 902, the UDM transmits a UE authentication response to the AUSF, and the UE authentication response may include a subscription credential (such as an Authentication and Key Agreement (AKA) authentication vector) and an authentication method.

Here, besides returning an AKMA indication (AKMA Ind) (i.e., indicating whether the AUSF needs to generate AKMA key material for the UE, including, for example, A-KID and K_{AKMA}) and the RID information of the UE to the AUSF, the UDM may further carry roaming information of the UE (that is, roaming information of the terminal), such as first indication information indicating that the UE is in a roaming state, second indication information indicating that the UE is not in a roaming state, roaming destination information (such as the identifier or name of the roaming destination), subscription information of the UE at the roaming destination, policy information of the UE at the roaming destination, etc.

At 903, according to an AKMA indication received from the UDM, the AUSF derives the K_{AKMA} and the A-KID from the key K_{AUSF} after the primary authentication procedure is completed. Correspondingly, the UE derives the K_{AKMA} and the A-KID from the key K_{AUSF}.

At 904, the AUSF addresses the AAnF of the HPLMN and transmits a key registration request to the AAnF. The request message may carry the A-KID, the K_{AKMA}, and the SUPI of the UE, and may further carry roaming information of the UE (that is, roaming information of the terminal), such as the first indication information indicating that the UE is in a roaming state, the second indication information indicating that the UE is not in a roaming state, the roaming destination information (such as the identifier or name of the roaming destination), the subscription information of the UE at the roaming destination, the policy information of the UE at the roaming destination, etc.

At 905, the AAnF transmits a key registration response to the AUSF.

At 906, the AAnF transmits AKMA context information of the UE to the first device according to a local policy. The AKMA context information includes the A-KID, the K_{AKMA} and so on.

Here, operation 906 may be completed before operation 905, or may be performed simultaneously with operation 905.

At 907, the UE establishes communication with an AF, and the UE transmits an Application Session Establishment Request to the AF. The request message may include the A-KID.

At 908, if no AKMA context associated with the A-KID exists in the AKMA AF, the AF addresses a locally deployed first device according to a local configuration or policy or according to a policy obtained from another network element (such as NRF), and transmits a key acquisition request to the first device. The request message may carry the A-KID and the identifier of the AF (AF ID).

At 909, the first device checks whether the first device can provide a service for the AF using the AF ID according to a configured local policy, or authorization information provided by the NRF or a policy provided by the NRF. If it is determined that the first device can provide a service for the AF, a subsequent procedure is performed; otherwise, the first device refuses to perform the subsequent procedure. In a case that no K_{AF} exists in the first device, an AKMA application key (K_{AF}) is derived according to the K_{AKMA}.

At 910, the first device transmits a key acquisition response to the AF. The response message may carry the K_{AF}, validity duration information of the K_{AF} (such as a life cycle) and the SUPI.

At 911, the AF transmits an Application Session Establishment Response to the UE.

### Example III

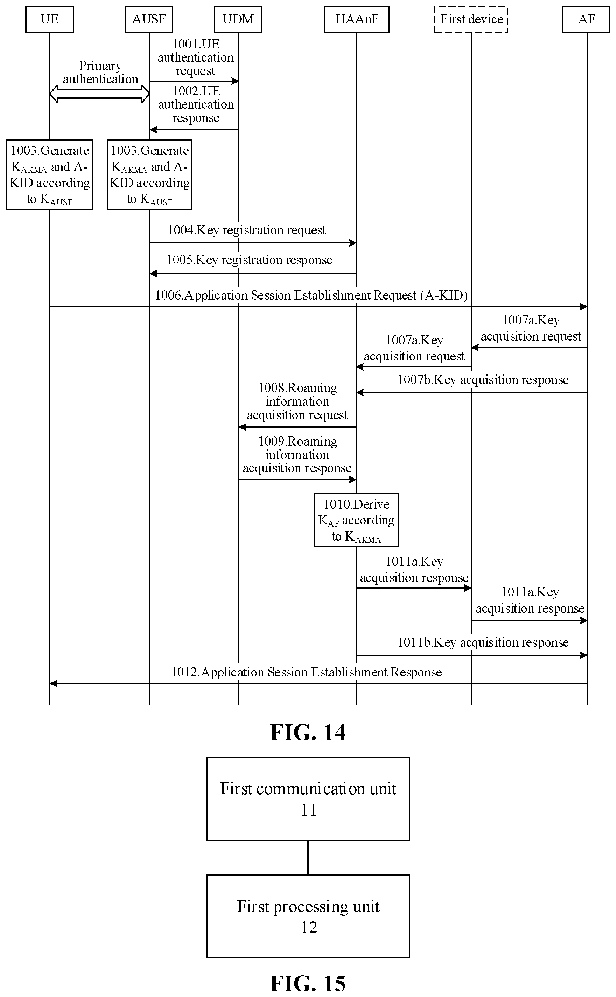

FIG. 14 illustrates a third schematic diagram of an interaction procedure of a method for communication according to embodiments of the disclosure. As illustrated in FIG. 14, the method includes following operations.

At 1001, during primary authentication between UE and an AUSF, the AUSF transmits a UE authentication request to a UDM. The UE authentication request may include a UE identifier.

Here, the UE identifier may include an SUPI and/or an SUCI.

At 1002, the UDM transmits a UE authentication response to the AUSF, and the UE authentication response may include a subscription credential (such as an Authentication and Key Agreement (AKA) authentication vector) and an authentication method.

Here, besides returning an AKMA indication (AKMA Ind) (i.e., indicating whether the AUSF needs to generate AKMA key material for the UE, including, for example, A-KID and K_{AKMA}) and the RID information of the UE to the AUSF, the UDM may further carry roaming information of the UE (that is, roaming information of the terminal), such as first indication information indicating that the UE is in a roaming state, second indication information indicating that the UE is not in a roaming state, roaming destination information (such as the identifier or name of the roaming destination), subscription information of the UE at the roaming destination, policy information of the UE at the roaming destination, etc.

At 1003, according to an AKMA indication received from the UDM, the AUSF derives the K_{AKMA} and the A-KID from the key K_{AUSF} after the primary authentication procedure is completed. Correspondingly, the UE derives the KAKMA and the A-KID from the key KAUSF.

At 1004, the AUSF addresses the AAnF of the HPLMN and transmits a key registration request to the AAnF. The request message may carry the A-KID, the K_{AKMA}, and the SUPI of the UE, and may further carry roaming information of the UE (that is, roaming information of the terminal), such as the first indication information indicating that the UE is in a roaming state, the second indication information indicating that the UE is not in a roaming state, the roaming destination information (such as the identifier or name of the roaming destination), the subscription information of the UE at the roaming destination, the policy information of the UE at the roaming destination, etc.

At 1005, the AAnF transmits a key registration response to the AUSF.

At 1006, the UE establishes communication with an AF, and the UE transmits an Application Session Establishment Request to the AF. The request message may include the A-KID.

At 1007a, in a case that a first device is deployed in the VPLMN, if no AKMA context associated with the A-KID exists in the AF, the AF addresses a locally deployed first device according to a local configuration or policy or according to a policy obtained from another network element (such as an NRF), and transmits a key acquisition request to the first device. After receiving the key acquisition request, the first device transmits a key acquisition request to the AAnF. The request message may carry the A-KID and the identifier of the AF (AF ID).

At 1007b, in a case that no first device is deployed in the VPLMN, if no AKMA context associated with the A-KID exists in the AF, the AF chooses to address the AAnF of the HPLMN according to a local configuration or policy or according to a policy obtained from another network element (such as an NRF), and transmits a key acquisition request to the AAnF. The request message may carry the A-KID and the identifier of the AF (AF ID).

At 1008 to 1009, after receiving the key acquisition request, the AAnF transmits a roaming information acquisition request to the UDM. The request message may include an SUPI. The UDM may query and obtain the roaming information of the corresponding UE (that is, the roaming information of the terminal) according to the SUPI, and transmit a roaming information acquisition response to the AAnF. The response message includes the roaming information of the UE (that is, the roaming information of the terminal).

The roaming information of the UE (namely the roaming information of the terminal) may include: first indication information indicating that the UE is in a roaming state, second indication information indicating that the UE is not in a roaming state, roaming destination information (for example, the identifier or name of the roaming destination), subscription information of the UE at a roaming destination, policy information of the UE at the roaming destination and so on.

At 1010, in a case that no K_{AF} exists in the AAnF, the AAnF derives an AKMA application key (K_{AF}) according to the K_{AKMA}.

At 1011a, in a case that a first device is deployed in the VPLMN, the AAnF transmits a key acquisition response to the first device, and after receiving the key acquisition response, the first device transmits the key acquisition response to the AF. The response message may carry the K_{AF}, validity duration information of the K_{AF} (such as a life cycle) and the SUPI.

At 1011b, in a case that no first device is deployed in the VPLMN, the AAnF transmits a key acquisition response to the AF. The response message may carry the K_{AF}, validity duration information of the K_{AF} (such as a life cycle) and the SUPI.

In this example, the AAnF checks whether the AAnF can provide a service for the AF using the AF ID according to a configured local policy, or authorization information provided by the NRF or a policy provided by the NRF, or the AAnF checks whether the AAnF can provide a service for the AF using the AF ID in combination with roaming information of the UE (for example, subscription information of the UE at the roaming destination and/or policy information of the UE at the roaming destination). If the AAnF determines that the AAnF can provide a service for the AF, operation 1010 and a subsequent procedure are performed. Otherwise, the AAnF refuses to perform operation 1010 and the subsequent procedure.

At 1012, the AF transmits an Application Session Establishment Response to the UE.

Based on the above embodiments, embodiments of the disclosure further provide an apparatus for communication. The apparatus is applied to an Authentication and Key Management for Applications (AKMA) Anchor Function (AAnF). FIG. 15 illustrates a first schematic structural diagram of composition of an apparatus for communication according to embodiments of the disclosure not covered by the claimed invention. As illustrated in FIG. 15, the apparatus includes a first communication unit 11 and a first processing unit 12.

The first communication unit 11 is configured to receive a first message transmitted by an Application Function (AF) or transmitted by the AF through a first device. The first message is configured to acquire a key K_{AF}.

The first processing unit 12 is configured to check whether the AAnF is able to provide a service for the AF.

The first communication unit 11 is further configured to transmit a second message to the AF or to the AF through the first device in a case that the first processing unit 12 checks that the AAnF is able to provide a service for the AF. The second message includes at least the key K_{AF}.

In some optional embodiments of the disclosure, the AAnF is within a Home Public Land Mobile Network (HPLMN), and/or the first device is within a Visit Public Land Mobile Network (VPLMN), and/or the AF is within the VPLMN.

In some optional embodiments of the disclosure, the first message includes an Authentication and Key Management for Applications (AKMA) key identifier (A-KID) and/or an identifier of the AF.

In some optional embodiments of the disclosure not covered by the claimed invention, the first processing unit 12 is further configured to derive the key K_{AF} based on an AKMA anchor key K_{AKMA}

In some optional embodiments of the disclosure, the second message further includes at least one of: validity duration information of the key K_{AF}; a Subscription Permanent Identifier (SUPI); or a Generic Public Subscription Identifier (GPSI).

In some optional embodiments of the disclosure not covered by the claimed invention, the first communication unit 11 is further configured to receive a third message transmitted by an Authentication Server Function (AUSF). The third message is configured to register a key and includes at least one of: an AKMA key identifier (A-KID), an AKMA anchor key K_{AKMA}, a Subscription Permanent Identifier (SUPI), or roaming information of a terminal.

In some optional embodiments of the disclosure, the roaming information of the terminal includes at least one of: first indication information indicating that the terminal is in a roaming state, second indication information indicating that the terminal is not in a roaming state, roaming destination information, subscription information of the terminal at a roaming destination, or policy information of the terminal at the roaming destination.

In some optional embodiments of the disclosure, the roaming information of the terminal is obtained by the AUSF from a Unified Data Management (UDM).

In some optional embodiments of the disclosure, the roaming information of the terminal obtained by the AUSF from the UDM is associated with the SUPI of the terminal.

In some optional embodiments of the disclosure not covered by the claimed invention, the first communication unit 11 is further configured to obtain roaming information of a terminal from a Unified Data Management (UDM) after receiving the first message. The roaming information of the terminal is related to a terminal corresponding to the A-KID in the first message.

In some optional embodiments of the disclosure not covered by the claimed invention, the first processing unit 12 is configured to check, according to the roaming information of the terminal, whether the AAnF is able to provide a service for the AF.

In the embodiments of the disclosure not covered by the claimed invention, the first processing unit 12 in the apparatus may be realized by a central processing unit (CPU), a digital signal processor (DSP), a microcontroller unit (MCU) or a field programmable gate array (FPGA) in practical applications. The first communication unit 11 in the apparatus may be realized by a communication module (including a basic communication suite, an operating system, a communication module, a standardized interface and protocols, and etc.) and a transceiving antenna in practical applications.

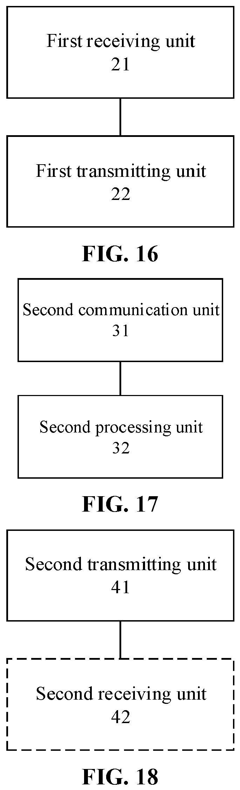

Embodiments of the disclosure further provide an apparatus for communication. The apparatus is applied to a first device. FIG. 16 illustrates a second schematic structural diagram of composition of an apparatus for communication according to embodiments of the disclosure not covered by the claimed invention. As illustrated in FIG. 16, the apparatus includes a first receiving unit 21 and a first transmitting unit 22.

The first receiving unit 21 is configured to receive a first message transmitted by an Application Function (AF), and transmit the first message to an Authentication and Key Management for Applications (AKMA) Anchor Function (AAnF). The first message is configured to acquire a key K_{AF}.

The first transmitting unit 22 is configured to: in a case that the AAnF is able to provide a service for the AF, receive a second message transmitted by the AAnF and transmit the second message to the AF. The second message includes at least the key K_{AF}.

In some optional embodiments of the disclosure, the AAnF is within a Home Public Land Mobile Network (HPLMN), and/or the first device is within a Visit Public Land Mobile Network (VPLMN), and/or the AF is within the VPLMN.

In some optional embodiments of the disclosure, the first message includes an Authentication and Key Management for Applications (AKMA) key identifier (A-KID) and/or an identifier of the AF.

In some optional embodiments of the disclosure, the second message further includes at least one of: validity duration information of the key K_{AF}; a Subscription Permanent Identifier (SUPI); or a Generic Public Subscription Identifier (GPSI).

In the embodiments of the disclosure not covered by the claimed invention, the first receiving unit 21 and the first transmitting unit 22 in the apparatus may be realized by a communication module (including a basic communication suite, an operating system, a communication module, a standardized interface and protocols, and etc.) and a transceiving antenna in practical applications.

Embodiments of the disclosure not covered by the claimed invention further provide an apparatus for communication. The apparatus is applied to a first device. FIG. 17 illustrates a third schematic structural diagram of composition of an apparatus for communication according to embodiments of the disclosure not covered by the claimed invention. As illustrated in FIG. 17, the apparatus includes a second communication unit 31 and a second processing unit 32.

The second communication unit31 is configured to receive a first message transmitted by an Application Function (AF). The first message is configured to acquire a key K_{AF}.

The second processing unit 32 is configured to check whether the first device is able to provide a service for the AF.

The second communication unit 31 is further configured to transmit a second message to the AF in a case that the second processing unit 32 checks that the first device is able to provide a service for the AF. The second message includes at least the key K_{AF}.

In some optional embodiments of the disclosure, the first message includes an Authentication and Key Management for Applications (AKMA) key identifier (A-KID) and/or an identifier of the AF.

In some optional embodiments of the disclosure not covered by the claimed invention, the second communication unit 31 is configured to receive first information transmitted by an Authentication and Key Management for Applications (AKMA) Anchor Function (AAnF). The first information includes AKMA context information.

In some optional embodiments of the disclosure, the first information includes at least one of: an AKMA key identifier (A-KID), an AKMA anchor key K_{AKMA} or a Subscription Permanent Identifier (SUPI).

In some optional embodiments of the disclosure not covered by the claimed invention, the second processing unit 32 is further configured to derive the key K_{AF} based on an AKMA anchor key K_{AKMA}

In some optional embodiments of the disclosure, the AAnF is within a Home Public Land Mobile Network (HPLMN), and/or the first device is within a Visit Public Land Mobile Network (VPLMN), and/or the AF is within the VPLMN.

In the embodiments of the disclosure not covered by the claimed invention, the second processing unit 32 in the apparatus may be realized by a CPU, a DSP, an MCU or an FPGA in practical applications. The second communication unit 31 in the apparatus may be realized by a communication module (including a basic communication suite, an operating system, a communication module, a standardized interface and protocols, and etc.) and a transceiving antenna in practical applications.

Embodiments of the disclosure not covered by the claimed invention further provide an apparatus for communication. The apparatus is applied to an Authentication and Key Management for Applications (AKMA) Anchor Function (AAnF). FIG. 18 illustrates a fourth schematic structural diagram of composition of an apparatus for communication according to embodiments of the disclosure. As illustrated in FIG. 18, the apparatus includes a second transmitting unit, configured to transmit first information to a first device. The first information includes AKMA context information.

In some optional embodiments of the disclosure, the first information includes at least one of: an AKMA key identifier (A-KID), an AKMA anchor key K_{AKMA} or a Subscription Permanent Identifier (SUPI).

In some optional embodiments of the disclosure not covered by the claimed invention, the apparatus further includes a second receiving unit 42. The second receiving unit 42 is configured to receive a third message transmitted by an Authentication Server Function (AUSF). The third message is configured to register a key and includes at least one of: an AKMA key identifier (A-KID), an AKMA anchor key K_{AKMA}, a Subscription Permanent Identifier (SUPI), or roaming information of a terminal.

In some optional embodiments of the disclosure, the roaming information of the terminal includes at least one of: first indication information indicating that the terminal is in a roaming state, second indication information indicating that the terminal is not in a roaming state, roaming destination information, subscription information of the terminal at a roaming destination, or policy information of the terminal at the roaming destination.

In some optional embodiments of the disclosure, the roaming information of the terminal is obtained by the AUSF from a Unified Data Management (UDM).

In some optional embodiments of the disclosure, the roaming information of the terminal obtained by the AUSF from the UDM is associated with the SUPI of the terminal.

In some optional embodiments of the disclosure, the AAnF is within a Home Public Land Mobile Network (HPLMN), and/or the first device is within a Visit Public Land Mobile Network (VPLMN).

In the embodiments of the disclosure not covered by the claimed invention, the second receiving unit 42 and the second transmitting unit 41 in the apparatus may be implemented by a communication module (including a basic communication suite, an operating system, a communication module, a standardized interface and protocols, and etc.) and a transceiving antenna in practical applications.

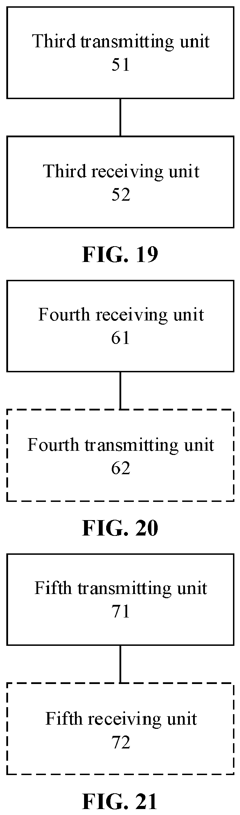

Embodiments of the disclosure not covered by the claimed invention further provide an apparatus for communication. The apparatus is applied to an Application Function (AF). FIG. 19 illustrates a fifth schematic structural diagram of composition of an apparatus for communication according to embodiments of the disclosure. As illustrated in FIG. 19, the apparatus includes a third transmitting unit 51 and a third receiving unit 52.

The third transmitting unit 51 is configured to transmit a first message to a first device or to an Authentication and Key Management for Applications (AKMA) Anchor Function (AAnF). The first message is configured to acquire a key K_{AF}.

The third receiving unit 52 is configured to receive a second message transmitted by the first device in a case that the first device checks that the first device is able to provide a service for the AF or receive the second message transmitted by the AAnF in a case that the AAnF checks that the AAnF is able to provide a service for the AF. The second message includes at least the key K_{AF}.

In some optional embodiments of the disclosure, the AAnF is within a Home Public Land Mobile Network (HPLMN), and/or the first device is within a Visit Public Land Mobile Network (VPLMN), and/or the AF is within the VPLMN.

In some optional embodiments of the disclosure, the first message includes an Authentication and Key Management for Applications (AKMA) key identifier (A-KID) and/or an identifier of the AF.

In some optional embodiments of the disclosure, the second message further includes at least one of: validity duration information of the key K_{AF}; a Subscription Permanent Identifier (SUPI); or a Generic Public Subscription Identifier (GPSI).

In the embodiments of the disclosure not covered by the claimed invention, the third receiving unit 52 and the third transmitting unit 51 in the apparatus may be realized by a communication module (including a basic communication suite, an operating system, a communication module, a standardized interface and protocols, and etc.) and a transceiving antenna in practical applications.

Embodiments of the disclosure not covered by the claimed invention further provide an apparatus for communication. The apparatus is applied to an Authentication Server Function (AUSF). FIG. 20 illustrates a sixth schematic structural diagram of composition of an apparatus for communication according to embodiments of the disclosure not covered by the claimed invention. As illustrated in FIG. 20, the apparatus includes a fourth receiving unit 61, configured to obtain authentication related information from a Unified Data Management (UDM). The authentication related information includes at least one of: third indication information indicating that Authentication and Key Management for Applications (AKMA) key material needs to be generated for a terminal, fourth indication information indicating that no AKMA key material needs to be generated for the terminal, router identifier (RID) information of the terminal, or roaming information of the terminal.

In some optional embodiments of the disclosure, the roaming information of the terminal includes at least one of: first indication information indicating that the terminal is in a roaming state, second indication information indicating that the terminal is not in a roaming state, roaming destination information, subscription information of the terminal at a roaming destination, or policy information of the terminal at the roaming destination.

In some optional embodiments of the disclosure not covered by the claimed invention, the apparatus further includes a fourth transmitting unit 62, configured to transmit a third message to an AKMA Anchor Function (AAnF). The third message is configured to register a key and includes at least one of: an AKMA key identifier (A-KID), an AKMA anchor key K_{AKMA}, a Subscription Permanent Identifier (SUPI), or roaming information of the terminal.

In the embodiments of the disclosure not covered by the claimed invention, the fourth receiving unit 61 and the fourth transmitting unit 62 in the apparatus may be realized by a communication module (including a basic communication suite, an operating system, a communication module, a standardized interface and protocols, and etc.) and a transceiving antenna in practical applications.

Embodiments of the disclosure not covered by the claimed invention further provide an apparatus for communication. The apparatus is applied to a Unified Data Management (UDM). FIG. 21 illustrates a seventh schematic structural diagram of composition of an apparatus for communication according to embodiments of the disclosure not covered by the claimed invention. As illustrated in FIG. 21, the apparatus includes a fifth transmitting unit 71, configured to transmit authentication related information to an Authentication Server Function (AUSF). The authentication related information includes at least one of: third indication information indicating that Authentication and Key Management for Applications (AKMA) key material needs to be generated for a terminal, fourth indication information indicating that no AKMA key material needs to be generated for the terminal, router identifier (RID) information of the terminal, or roaming information of the terminal.

In some optional embodiments of the disclosure, the roaming information of the terminal includes at least one of: first indication information indicating that the terminal is in a roaming state, second indication information indicating that the terminal is not in a roaming state, roaming destination information, subscription information of the terminal at a roaming destination, or policy information of the terminal at the roaming destination.

In some optional embodiments of the disclosure not covered by the claimed invention, the apparatus further includes a fifth receiving unit 72, configured to receive a fourth message transmitted by an AKMA Anchor Function (AAnF). The fourth message is configured to request the roaming information of the terminal.

The method further includes that the UDM transmits a fifth message to the AAnF. The fifth message includes the roaming information of the terminal.

In the embodiments of the disclosure not covered by the claimed invention, the fifth receiving unit 72 and the fifth transmitting unit 71 in the apparatus may be implemented by a communication module (including a basic communication suite, an operating system, a communication module, a standardized interface and protocols, and etc.) and a transceiving antenna in practical applications.

It is to be noted that for the above apparatus for communication according to the embodiments, the division of the program modules above is used as an example for description of the communication only. In practical applications, the processing may be allocated to and accomplished by different program modules according to demands. Namely, the inner structure of the apparatus may be divided into different program modules to accomplish all or part of the processing described above. Additionally, the above apparatus for communication according to the embodiments belong to the same concept as the method for communication, and details of the particular implementation process of the apparatus may refer to the method embodiments, which will not be described here again.

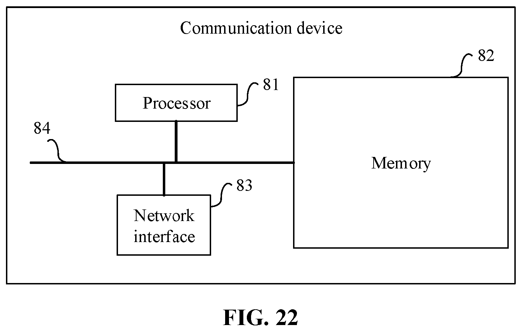

Embodiments of the disclosure further provide a communication device. The communication device is for example an AAnF, a first device, an AF, an AUSF or a UDM. FIG. 22 illustrates a schematic structural diagram of hardware composition of a communication device according to embodiments of the disclosure. As illustrated in FIG. 22, the communication device includes a memory 82, a processor 81, and a computer program that is stored in the memory 82 and is capable of being run on the processor 81. The processor 81 executes the computer program to implement the steps of the method for communication applied to the AAnF according to the embodiments of the disclosure. Alternatively, the processor 81 executes the computer program to implement the steps of the method for communication applied to the first device according to the embodiments of the disclosure. Alternatively, the processor 81 executes the computer program to implement the steps of the method for communication applied to the AF according to the embodiments of the disclosure. Alternatively, the processor 81 executes the computer program to implement the steps of the method for communication applied to the AUSF according to the embodiments of the disclosure. Alternatively, the processor 81 executes the computer program to implement the steps of the method for communication applied to the UDM according to the embodiments of the disclosure.

Optionally, the communication device further includes at least one network interface 83. The components in the communication device are coupled together through a bus system 84. It may be understood that the bus system 84 is used for realizing the connection and communication between the components. Besides a data bus, the bus system 84 further includes a power bus, a control bus and a state signal bus. However, for clarity of description, the buses are all signed as the bus system 84 in FIG. 22.

It may be understood that the memory 82 may be a volatile memory or a non-volatile memory, or may include both a volatile memory and a non-volatile memory. The non-volatile memory may be a Read Only Memory (ROM), a Programmable Read-Only Memory (PROM), an Erasable Programmable Read-Only Memory (EPROM) an Electrically Erasable Programmable Read-Only Memory (EEPROM), a Ferromagnetic Random Access Memory (FRAM), a Flash Memory, a magnetic surface memory, an optical disc, or a compact disk read only memory (CD-ROM), or may be a device containing one or a combination of those memories. The magnetic surface memory may be a hard disk memory or a tape memory. The volatile memory may be a random access memory (RAM), that is used as an external cache. By way of example but not limiting, many forms of RAMs are usable, for example a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory 82 described in the embodiments of the disclosure is intended to include but not limited to memories of these and any other suitable types.

The method disclosed in above embodiments of the disclosure may be applied to the processor 81, or may be implemented by the processor 81. The processor 81 may be an integrated circuit chip, and has the capability of signal processing. During implementation, the various steps of in the above method may be completed by an integrated logic circuit in hardware form or instructions in software form in the processor 81. The above processor 81 may be a general-purpose processor, a digital signal processor (DSP), or other programmable logic devices, discrete gates or transistor logic devices, discrete hardware components and so on. The processor 81 may implement or perform the various methods, steps or logic blocks disclosed in the embodiments of the disclosure. The universal processor may be a microprocessor or any conventional processor and the like. The steps of the methods disclosed in combination with the embodiments of the disclosure may be directly embodied as being performed and completed by a hardware decoding processor, or being performed and completed by a combination of hardware and software modules in a decoding processor. The soft modules may be located in a storage medium. The storage medium is in the memory 82, and the processor 81 reads information from the memory 82 to implement steps of the above methods in combination with the hardware.

In an exemplary embodiment, the communication device may be implemented by one or more Application Specific Integrated Circuit (ASICs), DSPs, Programmable Logic Devices (PLDs), Complex Programmable Logic Devices (CPLDs), FPGAs, general-purpose processors, controllers, MCUs, Microprocessors, or other electronic elements, to execute the method above.

In an exemplary embodiment, embodiments of the disclosure further provide a computer-readable storage medium, for example the memory 82 including a computer program. The computer program may be executed by the processor 81 of the communication device, to accomplish the steps of the above method. The computer-readable storage medium may be such as a ferroelectroc random access memory (FRAM), a read-only memory (ROM), a programmable read-only memory (PROM), an electrically programmable read-only memory (EPROM), an electrically erasable programmable read-only memory (EEPROM), a flash drive, a magnetic surface memory, an optical disc, or a compact disk read only memory (CD-ROM), or may be a device containing one or a combination of those memories.

Embodiments of the disclosure not covered by the claimed invention further provide a computer-readable storage having stored thereon a computer program. The computer program, when executed by a processor, causes the processor to implement steps of the method for communication applied to an AAnF according to the embodiments of the disclosure. Alternatively, the computer program, when executed by a processor, causes the processor to implement steps of the method for communication applied to a first device according to the embodiments of the disclosure. Alternatively, the computer program, when executed by a processor, causes the processor to implement steps of the method for communication applied to an AF according to the embodiments of the disclosure. Alternatively, the computer program, when executed by a processor, causes the processor to implement steps of the method for communication applied to an AUSF according to the embodiments of the disclosure. Alternatively, the computer program, when executed by a processor, causes the processor to implement steps of the method for communication applied to a UDM according to the embodiments of the disclosure.

The methods disclosed in the method embodiments according to the disclosure may be arbitrarily without conflict, to obtain a new method embodiment.

The features disclosed in the product embodiments according to the disclosure may be arbitrarily without conflict, to obtain a new product embodiment.

The features disclosed in the method embodiments or device embodiments according to the disclosure may be arbitrarily without conflict, to obtain a new method embodiment or a new device embodiment.

In some embodiments provided in the disclosure, it is to be understood that the disclosed device and method may be implemented in other ways. The device embodiments described above are only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the disclosure may be all integrated in one processing unit, or may exist separately physically; or two or more units may be integrated in one unit. The integrated unit may be implemented in form of hardware, or may be implemented in form of hardware plus software functions.

Those of ordinary skill in the art may understand that all or some steps of the above method embodiment may be accomplished by hardware related to program instructions. The program described above may be stored in a computer-readable storage medium, and the program, when executed, implements the steps of the method embodiments. The foregoing storage medium includes various media capable of storage program codes such as a mobile hard disk drive, a read-only memory (ROM), a random access memory (RAM), a magnetic disc, or a compact disc (CD).

Alternatively, if implemented in form of software functional units and sold or used as independent product, the above integrated unit of the disclosure may also be stored in a computer-readable storage medium. Based on such understanding, the technical solution of the embodiments of the disclosure substantially or in part making contributions to the related art may be embodied in a software product. The computer software product is stored in a storage medium, and includes several instructions to enable a computer device (which may be a personal computer, a server, a network device or the like) to perform all or some of the method according to various embodiments of the disclosure. The foregoing storage medium includes various media capable of storage program codes such as a mobile hard disk drive, a read-only memory (ROM), a random access memory (RAM), a magnetic disc, or a compact disc (CD).

Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subjected to the claimed scope of the claims.

## Claims

1. A method for communication, comprising:
receiving (101), by an Authentication and Key Management for Applications, AKMA, Anchor Function, AAnF, a first message transmitted by an Application Function, AF, or transmitted by the AF through a first device, wherein the first message is configured to acquire a key K_{AF}, and the first message comprises an AKMA key identifier, A-KID; and
in a case of checking that the AAnF is able to provide a service for the AF, transmitting (102), by the AAnF, a second message to the AF or to the AF through the first device, wherein the second message comprises at least the key K_{AF};
**characterized in that** after receiving the first message, the method further comprises:
obtaining, by the AAnF, roaming information of a terminal from a Unified Data Management, UDM, wherein the roaming information of the terminal is related to a terminal corresponding to the A-KID in the first message.

2. The method of claim 1, wherein the AAnF is within a Home Public Land Mobile Network, HPLMN, and/or the first device is within a Visit Public Land Mobile Network, VPLMN, and/or the AF is within the VPLMN, and
wherein the second message further comprises at least one of:
validity duration information of the key K_{AF};
a Subscription Permanent Identifier, SUPI; or
a Generic Public Subscription Identifier, GPSI.

3. The method of claim 1, further comprising:
deriving, by the AAnF, the key K_{AF} based on an AKMA anchor key K_{AKMA}.

4. The method of any one of claims 1 to 3, further comprising:
receiving, by the AAnF, a third message transmitted by an Authentication Server Function, AUSF, wherein the third message is configured to register a key and comprises at least one of:
an A-KID, an AKMA anchor key K_{AKMA}, a Subscription Permanent Identifier, SUPI, or the roaming information of the terminal,
wherein the roaming information of the terminal comprises at least one of:
first indication information indicating that the terminal is in a roaming state, second indication information indicating that the terminal is not in a roaming state, roaming destination information, subscription information of the terminal at a roaming destination, or policy information of the terminal at the roaming destination,
wherein the roaming information of the terminal is obtained by the AUSF from the UDM,
wherein the roaming information of the terminal obtained by the AUSF from the UDM is associated with the SUPI of the terminal.

5. The method of claim 2, wherein the first message comprises an identifier of the AF.

6. The method of claim 4 or 5, wherein checking, by the AAnF, whether the AAnF is able to provide a service for the AF comprises:
checking, by the AAnF according to the roaming information of the terminal, whether the AAnF is able to provide a service for the AF.

7. A method for communication, comprising:
transmitting (701), by a Unified Data Management, UDM, authentication related information to an Authentication Server Function, AUSF, wherein the authentication related information comprises at least one of:
third indication information indicating that Authentication and Key Management for Applications, AKMA, key material needs to be generated for a terminal, fourth indication information indicating that no AKMA key material needs to be generated for the terminal, router identifier, RID, information of the terminal, or roaming information of the terminal;
**characterized in that** the method further comprises:
receiving, by the UDM, a fourth message transmitted by an AKMA Anchor Function, AAnF, wherein the fourth message is configured to request the roaming information of the terminal; and
transmitting, by the UDM, a fifth message to the AAnF, wherein the fifth message comprises the roaming information of the terminal.

8. The method of claim 7, wherein the roaming information of the terminal comprises at least one of:
first indication information indicating that the terminal is in a roaming state, second indication information indicating that the terminal is not in a roaming state, roaming destination information, subscription information of the terminal at a roaming destination, or policy information of the terminal at the roaming destination.

9. A communication device, applied to an Authentication and Key Management for Applications, AKMA, Anchor Function, AAnF, wherein the communication device comprises a memory, a processor, and a computer program that is stored in the memory and is capable of being run on the processor, and the processor executes the computer program to cause the AAnF to:
receive a first message transmitted by an Application Function, AF, or transmitted by the AF through a first device, wherein the first message is configured to acquire a key K_{AF}, and the first message comprises an AKMA key identifier, A-KID; and
transmit a second message to the AF or to the AF through the first device, in a case of checking that the AAnF is able to provide a service for the AF, wherein the second message comprises at least the key K_{AF};
**characterized in that** the processor further executes the computer program to cause the AAnF to:
obtain roaming information of a terminal from a Unified Data Management, UDM, wherein the roaming information of the terminal is related to a terminal corresponding to the A-KID in the first message.

10. The communication device of claim 9, wherein the AAnF is within a Home Public Land Mobile Network, HPLMN, and/or the first device is within a Visit Public Land Mobile Network, VPLMN, and/or the AF is within the VPLMN, and
wherein the second message further comprises at least one of:
validity duration information of the key K_{AF};
a Subscription Permanent Identifier, SUPI; or
a Generic Public Subscription Identifier, GPSI.

11. The communication device of claim 9, wherein the processor further executes the computer program to cause the AAnF to:
derive the key K_{AF} based on an AKMA anchor key K_{AKMA}.

12. The communication device of any one of claims 9 to 11, wherein the processor further executes the computer program to cause the AAnF to:
receive a third message transmitted by an Authentication Server Function, AUSF, wherein the third message is configured to register a key and comprises at least one of:
an A-KID, an AKMA anchor key K_{AKMA}, a Subscription Permanent Identifier, SUPI, or the roaming information of the terminal,
wherein the roaming information of the terminal comprises at least one of:
first indication information indicating that the terminal is in a roaming state, second indication information indicating that the terminal is not in a roaming state, roaming destination information, subscription information of the terminal at a roaming destination, or policy information of the terminal at the roaming destination,
wherein the roaming information of the terminal is obtained by the AUSF from the UDM,
wherein the roaming information of the terminal obtained by the AUSF from the UDM is associated with the SUPI of the terminal.

13. The communication device of claim 10, wherein the first message comprises an identifier of the AF.

14. The communication device of claim 12 or 13, wherein the processor further executes the computer program to cause the AAnF to:
check, according to the roaming information of the terminal, whether the AAnF is able to provide a service for the AF.

15. A communication device, applied to a Unified Data Management, UDM, wherein the communication device comprises a memory, a processor, and a computer program that is stored in the memory and is capable of being run on the processor, and the processor executes the computer program to cause the UDM to:
transmit authentication related information to an Authentication Server Function, AUSF, wherein the authentication related information comprises at least one of:
third indication information indicating that Authentication and Key Management for Applications, AKMA, key material needs to be generated for a terminal, fourth indication information indicating that no AKMA key material needs to be generated for the terminal, router identifier, RID, information of the terminal, or roaming information of the terminal;
**characterized in that** the processor further executes the computer program to cause the UDM to:
receive a fourth message transmitted by an AKMA Anchor Function, AAnF, wherein the fourth message is configured to request the roaming information of the terminal; and
transmit a fifth message to the AAnF, wherein the fifth message comprises the roaming information of the terminal.

## Patentansprüche

1. Kommunikationsverfahren, umfassend:
Empfangen (101), durch eine Ankerfunktion, AAnF, für Authentifizierung und Schlüsselverwaltung für Anwendungen, AKMA, einer ersten Nachricht, die durch eine Anwendungsfunktion, AF, gesendet wird oder durch die AF über eine erste Vorrichtung gesendet wird, wobei die erste Nachricht konfiguriert ist, um einen Schlüssel K_{AF}, zu erlangen, und die erste Nachricht eine AKMA-Schlüsselkennung, A-KID, umfasst; und
in einem Fall eines Prüfens, dass die AAnF in der Lage ist, einen Dienst für die AF bereitzustellen, Senden (102), durch die AAnF, einer zweiten Nachricht an die AF oder an die AF über die erste Vorrichtung, wobei die zweite Nachricht mindestens den Schlüssel K_{AF}; umfasst;
**dadurch gekennzeichnet, dass** nach dem Empfangen der ersten Nachricht das Verfahren ferner umfasst:
Erhalten, durch die AAnF, von Roaming-Informationen eines Endgeräts von einer einheitlichen Datenverwaltung, UDM, wobei sich die Roaming-Informationen des Endgeräts auf ein Endgerät beziehen, das der A-KID in der ersten Nachricht entspricht.

2. Verfahren nach Anspruch 1, wobei sich die AAnF innerhalb eines Heimatmobilkommunikationsnetzes, HPLMN, befindet und/oder sich die erste Vorrichtung innerhalb eines Aufenthaltsmobilkommunikationsnetzes, VPLMN, befindet und/oder sich die AF innerhalb des VPLMN befindet, und
wobei die zweite Nachricht ferner mindestens eines umfasst von:
Gültigkeitsdauerinformationen des Schlüssels K_{AF};
einer permanenten Teilnehmerkennung, SUPI; oder
einer generischen öffentlichen Teilnehmerkennung, GPSI.

3. Verfahren nach Anspruch 1, ferner umfassend:
Ableiten des Schlüssels K_{AF} durch die AAnF basierend auf einem AKMA-Ankerschlüssel K_{AKMA}.

4. Verfahren nach einem der Ansprüche 1 bis 3, ferner umfassend:
Empfangen, durch die AAnF, einer dritten Nachricht, die durch eine Authentifizierungsserverfunktion, AUSF, gesendet wird, wobei die dritte Nachricht konfiguriert ist, um einen Schlüssel zu registrieren, und mindestens eines umfasst von:
einer A-KID, einem AKMA-Ankerschlüssel K_{AKMA}, einer permanenten Teilnehmerkennung, SUPI, oder den Roaming-Informationen des Endgeräts,
wobei die Roaming-Informationen des Endgeräts mindestens eines umfassen von:
ersten Anzeigeinformationen, die anzeigen, dass sich das Endgerät in einem Roaming-Zustand befindet, zweiten Anzeigeinformationen, die anzeigen, dass sich das Endgerät nicht in einem Roaming-Zustand befindet, Roaming-Zielinformationen, Teilnahmeberechtigungsinformationen des Endgeräts an einem Roaming-Ziel oder Richtlinieninformationen des Endgeräts an dem Roaming-Ziel,
wobei die Roaming-Informationen des Endgeräts durch die AUSF von der UDM erhalten werden, wobei die Roaming-Informationen des Endgeräts, die durch die AUSF von der UDM erhalten werden, mit der SUPI des Endgeräts verknüpft sind.

5. Verfahren nach Anspruch 2, wobei die erste Nachricht eine Kennung der AF umfasst.

6. Verfahren nach Anspruch 4 oder 5, wobei das Prüfen durch die AAnF, ob die AAnF in der Lage ist, einen Dienst für die AF bereitzustellen, umfasst:
Prüfen, durch die AAnF gemäß den Roaming-Informationen des Endgeräts, ob die AAnF in der Lage ist, einen Dienst für die AF bereitzustellen.

7. Kommunikationsverfahren, umfassend:
Senden (701), durch eine einheitliche Datenverwaltung, UDM, von authentifizierungsbezogenen Informationen an eine Authentifizierungsserverfunktion, AUSF, wobei die authentifizierungsbezogenen Informationen mindestens eines umfassen von:
dritten Anzeigeinformationen, die anzeigen, dass Schlüsselmaterial für Authentifizierung und Schlüsselverwaltung für Anwendungen, AKMA, für ein Endgerät erzeugt werden muss, vierten Anzeigeinformationen, die anzeigen, dass kein AKMA-Schlüsselmaterial für das Endgerät erzeugt werden muss, Router-Kennungsinformationen, RID-Informationen, des Endgeräts oder Roaming-Informationen des Endgeräts;
**dadurch gekennzeichnet, dass** das Verfahren ferner umfasst:
Empfangen, durch die UDM, einer vierten Nachricht, die durch eine AKMA-Ankerfunktion, AAnF, gesendet wird, wobei die vierte Nachricht konfiguriert ist, um die Roaming-Informationen des Endgeräts anzufordern; und
Senden, durch die UDM, einer fünften Nachricht an die AAnF, wobei die fünfte Nachricht die Roaming-Informationen des Endgeräts umfasst.

8. Verfahren nach Anspruch 7, wobei die Roaming-Informationen des Endgeräts mindestens eines umfassen von:
ersten Anzeigeinformationen, die anzeigen, dass sich das Endgerät in einem Roaming-Zustand befindet, zweiten Anzeigeinformationen, die anzeigen, dass sich das Endgerät nicht in einem Roaming-Zustand befindet, Roaming-Zielinformationen, Teilnahmeberechtigungsinformationen des Endgeräts an einem Roaming-Ziel oder Richtlinieninformationen des Endgeräts an dem Roaming-Ziel.

9. Kommunikationsvorrichtung, die auf eine Ankerfunktion, AAnF für Authentifizierung und Schlüsselverwaltung für Anwendungen, AKMA, angewendet wird, wobei die Kommunikationsvorrichtung einen Speicher, einen Prozessor und ein Computerprogramm umfasst, das in dem Speicher gespeichert ist und fähig ist, auf dem Prozessor ausgeführt zu werden und der Prozessor das Computerprogramm ausführt, um die AAnF zu veranlassen zum:
Empfangen einer ersten Nachricht, die durch eine Anwendungsfunktion, AF, gesendet wird oder durch die AF über eine erste Vorrichtung gesendet wird, wobei die erste Nachricht konfiguriert ist, um einen Schlüssel K_{AF}, zu erlangen, und die erste Nachricht eine AKMA-Schlüsselkennung, A-KID, umfasst; und
Senden einer zweiten Nachricht an die AF oder an die AF über die erste Vorrichtung in einem Fall des Prüfens, dass die AAnF in der Lage ist, einen Dienst für die AF bereitzustellen, wobei die zweite Nachricht mindestens den Schlüssel K_{AF}; umfasst;
**dadurch gekennzeichnet, dass** der Prozessor ferner das Computerprogramm ausführt, um die AAnF zu veranlassen zum:
Erhalten von Roaming-Informationen eines Endgeräts von einer einheitlichen Datenverwaltung, UDM, wobei sich die Roaming-Informationen des Endgeräts auf ein Endgerät beziehen, das der A-KID in der ersten Nachricht entspricht.

10. Kommunikationsvorrichtung nach Anspruch 9, wobei sich die AAnF innerhalb eines Heimatmobilkommunikationsnetzes, HPLMN, befindet und/oder sich die erste Vorrichtung innerhalb eines Aufenthaltsmobilkommunikationsnetzes, VPLMN, befindet und/oder sich die AF innerhalb des VPLMN befindet, und
wobei die zweite Nachricht ferner mindestens eines umfasst von:
Gültigkeitsdauerinformationen des Schlüssels K_{AF};
einer permanenten Teilnehmerkennung, SUPI; oder
einer generischen öffentlichen Teilnehmerkennung, GPSI.

11. Kommunikationsvorrichtung nach Anspruch 9, wobei der Prozessor ferner das Computerprogramm ausführt, um die AAnF zu veranlassen zum:
Ableiten des Schlüssels K_{AF} basierend auf einem AKMA-Ankerschlüssel KAKMA.

12. Kommunikationsvorrichtung nach einem der Ansprüche 9 bis 11, wobei der Prozessor ferner das Computerprogramm ausführt, um die AAnF zu veranlassen zum:
Empfangen einer dritten Nachricht, die durch eine Authentifizierungsserverfunktion, AUSF, gesendet wird, wobei die dritte Nachricht konfiguriert ist, um einen Schlüssel zu registrieren, und mindestens eines umfasst von:
einer A-KID, einem AKMA-Ankerschlüssel K_{AKMA}, einer permanenten Teilnehmerkennung, SUPI, oder den Roaming-Informationen des Endgeräts,
wobei die Roaming-Informationen des Endgeräts mindestens eines umfassen von:
ersten Anzeigeinformationen, die anzeigen, dass sich das Endgerät in einem Roaming-Zustand befindet, zweiten Anzeigeinformationen, die anzeigen, dass sich das Endgerät nicht in einem Roaming-Zustand befindet, Roaming-Zielinformationen, Teilnahmeberechtigungsinformationen des Endgeräts an einem Roaming-Ziel oder Richtlinieninformationen des Endgeräts an dem Roaming-Ziel,
wobei die Roaming-Informationen des Endgeräts durch die AUSF von der UDM erhalten werden, wobei die Roaming-Informationen des Endgeräts, die durch die AUSF von der UDM erhalten werden, mit der SUPI des Endgeräts verknüpft sind.

13. Kommunikationsvorrichtung nach Anspruch 10, wobei die erste Nachricht eine Kennung der AF umfasst.

14. Kommunikationsvorrichtung nach Anspruch 12 oder 13, wobei der Prozessor ferner das Computerprogramm ausführt, um die AAnF zu veranlassen zum:
Prüfen, gemäß den Roaming-Informationen des Endgeräts, ob die AAnF in der Lage ist, einen Dienst für die AF bereitzustellen.

15. Kommunikationsvorrichtung, die auf eine einheitliche Datenverwaltung, UDM, angewendet wird, wobei die Kommunikationsvorrichtung einen Speicher, einen Prozessor und ein Computerprogramm umfasst, das in dem Speicher gespeichert ist und fähig ist, auf dem Prozessor ausgeführt zu werden, und der Prozessor das Computerprogramm ausführt, um die UDM zu veranlassen zum:
Senden von authentifizierungsbezogenen Informationen an eine Authentifizierungsserverfunktion, AUSF, wobei die authentifizierungsbezogenen Informationen mindestens eines umfassen von:
dritten Anzeigeinformationen, die anzeigen, dass Schlüsselmaterial für Authentifizierung und Schlüsselverwaltung für Anwendungen, AKMA, für ein Endgerät erzeugt werden muss, vierten Anzeigeinformationen, die anzeigen, dass kein AKMA-Schlüsselmaterial für das Endgerät erzeugt werden muss, Router-Kennungsinformationen, RID-Informationen, des Endgeräts oder Roaming-Informationen des Endgeräts;
**dadurch gekennzeichnet, dass** der Prozessor ferner das Computerprogramm ausführt, um die UDM zu veranlassen zum:
Empfangen einer vierten Nachricht, die durch eine AKMA-Ankerfunktion, AAnF, gesendet wird, wobei die vierte Nachricht konfiguriert ist, um die Roaming-Informationen des Endgeräts anzufordern; und
Senden einer fünften Nachricht an die AAnF, wobei die fünfte Nachricht die Roaming-Informationen des Endgeräts umfasst.

## Revendications

1. Procédé pour une communication, comprenant :
la réception (101), par une fonction d'ancrage, AAnF, d'authentification et de gestion de clé pour des applications, AKMA, d'un premier message transmis par une fonction d'application, AF, ou transmis par l'AF par l'intermédiaire d'un premier dispositif, dans lequel le premier message est configuré pour acquérir une clé K_{AF}, et le premier message comprend un identifiant de clé AKMA, A-KID ; et
dans un cas où il est vérifié que l'AAnF est en mesure de fournir un service pour l'AF, la transmission (102), par l'AAnF, d'un deuxième message à l'AF ou à l'AF par l'intermédiaire du premier dispositif, dans lequel le deuxième message comprend au moins la clé K_{AF} ;
**caractérisé en ce qu'**après réception du premier message, le procédé comprend en outre :
l'obtention, par l'AAnF, d'informations d'itinérance d'un terminal à partir d'une gestion unifiée de données, UDM, dans lequel les informations d'itinérance du terminal sont liées à un terminal correspondant à l'A-KID dans le premier message.

2. Procédé selon la revendication 1, dans lequel l'AAnF se trouve au sein d'un réseau mobile terrestre public domestique, HPLMN, et/ou le premier dispositif se trouve au sein d'un réseau mobile terrestre public de visite, VPLMN, et/ou l'AF se trouve dans le VPLMN, et
dans lequel le deuxième message comprend au moins l'un parmi :
des informations de durée de validité de la clé K_{AF} ;
un identifiant permanent d'abonnement, SUPI ; ou
un identifiant d'abonnement public générique, GPSI.

3. Procédé selon la revendication 1, comprenant en outre :
la dérivation, par l'AAnF, de la clé K_{AF} sur la base d'une clé d'ancrage AKMA K_{AKMA}.

4. Procédé selon l'une quelconque des revendications 1 à 3, comprenant en outre :
la réception, par l'AAnF, d'un troisième message transmis par une fonction de serveur d'authentification, AUSF, dans lequel le troisième message est configuré pour enregistrer une clé et comprend au moins l'un parmi :
un A-KID, une clé d'ancrage AKMA K_{AKMA}, un identifiant permanent d'abonnement, SUPI, ou les informations d'itinérance du terminal,
dans lequel les informations d'itinérance du terminal comprennent au moins l'une parmi :
des premières informations d'indication indiquant que le terminal est dans un état d'itinérance, des deuxièmes informations d'indication indiquant que le terminal n'est pas dans un état d'itinérance, des informations de destination d'itinérance, des informations d'abonnement du terminal à une destination d'itinérance, ou des informations de politique du terminal à la destination d'itinérance,
dans lequel les informations d'itinérance du terminal sont obtenues par l'AUSF auprès de l'UDM, dans lequel les informations d'itinérance du terminal obtenues par l'AUSF auprès de l'UDM sont associées au SUPI du terminal.

5. Procédé selon la revendication 2, dans lequel le premier message comprend un identifiant de l'AF.

6. Procédé selon la revendication 4 ou 5, dans lequel le fait de vérifier, par l'AAnF, si l'AAnF est en mesure de fournir un service pour l'AF comprend :
le fait de vérifier, par l'AAnF, selon les informations d'itinérance du terminal, si l'AAnF est en mesure de fournir un service pour l'AF.

7. Procédé pour une communication, comprenant :
la transmission (701), par une gestion unifiée de données, UDM, d'informations relatives à l'authentification à une fonction de serveur d'authentification, AUSF, dans lequel les informations relatives à l'authentification comprennent au moins l'une parmi :
des troisièmes informations d'indication indiquant qu'un matériau de clé d'authentification et de gestion de clés pour des applications, AKMA, doit être généré pour un terminal, des quatrièmes informations d'indication indiquant qu'aucun matériau de clé AKMA ne doit être généré pour le terminal, des informations d'identifiant de routeur, RID, du terminal, ou des informations d'itinérance du terminal ;
**caractérisé en ce que** le procédé comprend en outre :
la réception, par l'UDM, d'un quatrième message transmis par une fonction d'ancrage AKMA, AAnF, dans lequel le quatrième message est configuré pour demander les informations d'itinérance du terminal ; et
la transmission, par l'UDM, d'un cinquième message à l'AAnF, dans lequel le cinquième message comprend les informations d'itinérance du terminal.

8. Procédé selon la revendication 7, dans lequel les informations d'itinérance du terminal comprennent au moins l'une parmi :
des premières informations d'indication indiquant que le terminal est dans un état d'itinérance, des deuxièmes informations d'indication indiquant que le terminal n'est pas dans un état d'itinérance, des informations de destination d'itinérance, des informations d'abonnement du terminal à une destination d'itinérance, ou des informations de politique du terminal à la destination d'itinérance.

9. Dispositif de communication, appliqué à une fonction d'ancrage AAnF, d'authentification et de gestion de clé pour des applications, AKMA, dans lequel le dispositif de communication comprend une mémoire, un processeur et un programme informatique qui est stocké dans la mémoire et est capable d'être exécuté sur le processeur, et le processeur exécute le programme informatique pour amener l'AAnF à :
recevoir un premier message transmis par une fonction d'application, AF, ou transmis par l'AF par l'intermédiaire d'un premier dispositif, dans lequel le premier message est configuré pour acquérir une clé K_{AF}, et le premier message comprend un identifiant de clé AKMA, A-KID ; et
transmettre un deuxième message à l'AF ou à l'AF par l'intermédiaire du premier dispositif, dans un cas où il est vérifié que l'AAnF est en mesure de fournir un service pour l'AF, dans lequel le deuxième message comprend au moins la clé K_{AF} ;
**caractérisé en ce que** le processeur exécute en outre le programme informatique pour amener l'AAnF à :
obtenir des informations d'itinérance d'un terminal à partir d'une gestion unifiée de données, UDM, dans lequel les informations d'itinérance du terminal sont liées à un terminal correspondant à l'A-KID dans le premier message.

10. Dispositif de communication selon la revendication 9, dans lequel l'AAnF se trouve au sein d'un réseau mobile terrestre public domestique, HPLMN, et/ou le premier dispositif se trouve au sein d'un réseau mobile terrestre public de visite, VPLMN, et/ou l'AF se trouve dans le VPLMN, et
dans lequel le deuxième message comprend au moins l'un parmi :
des informations de durée de validité de la clé K_{AF} ;
un identifiant permanent d'abonnement, SUPI ; ou
un identifiant d'abonnement public générique, GPSI.

11. Dispositif de communication selon la revendication 9, dans lequel le processeur exécute en outre le programme informatique pour amener l'AAnF à :
dériver la clé K_{AF} sur la base d'une clé d'ancrage AKMA K_{AKMA}.

12. Dispositif de communication selon l'une quelconque des revendications 9 à 11, dans lequel le processeur exécute en outre le programme informatique pour amener l'AAnF à :
recevoir un troisième message transmis par une fonction de serveur d'authentification, AUSF, dans lequel le troisième message est configuré pour enregistrer une clé et comprend au moins l'un parmi :
un A-KID, une clé d'ancrage AKMA K_{AKMA}, un identifiant permanent d'abonnement, SUPI, ou les informations d'itinérance du terminal,
dans lequel les informations d'itinérance du terminal comprennent au moins l'une parmi :
des premières informations d'indication indiquant que le terminal est dans un état d'itinérance, des deuxièmes informations d'indication indiquant que le terminal n'est pas dans un état d'itinérance, des informations de destination d'itinérance, des informations d'abonnement du terminal à une destination d'itinérance, ou des informations de politique du terminal à la destination d'itinérance,
dans lequel les informations d'itinérance du terminal sont obtenues par l'AUSF auprès de l'UDM, dans lequel les informations d'itinérance du terminal obtenues par l'AUSF auprès de l'UDM sont associées au SUPI du terminal.

13. Dispositif de communication selon la revendication 10, dans lequel le premier message comprend un identifiant de l'AF.

14. Dispositif de communication selon la revendication 12 ou 13, dans lequel le processeur exécute en outre le programme informatique pour amener l'AAnF à :
vérifier, selon les informations d'itinérance du terminal, si l'AAnF est en mesure de fournir un service pour l'AF.

15. Dispositif de communication, appliqué à une gestion unifiée de données, UDM, dans lequel le dispositif de communication comprend une mémoire, un processeur et un programme informatique qui est stocké dans la mémoire et est capable d'être exécuté sur le processeur, et le processeur exécute le programme informatique pour amener l'UDM à :
transmettre des informations relatives à l'authentification à une fonction de serveur d'authentification, AUSF, dans lequel les informations relatives à l'authentification comprennent au moins l'une parmi :
des troisièmes informations d'indication indiquant qu'un matériau de clé d'authentification et de gestion de clés pour des applications, AKMA, doit être généré pour un terminal, des quatrièmes informations d'indication indiquant qu'aucun matériau de clé AKMA ne doit être généré pour le terminal, des informations d'identifiant de routeur, RID, du terminal, ou des informations d'itinérance du terminal ;
**caractérisé en ce que** le processeur exécute en outre le programme informatique pour amener l'UDM à :
recevoir un quatrième message transmis par une fonction d'ancrage AKMA, AAnF, dans lequel le quatrième message est configuré pour demander les informations d'itinérance du terminal ; et
transmettre un cinquième message à l'AAnF, dans lequel le cinquième message comprend les informations d'itinérance du terminal.
